# EUROPEAN PATENT APPLICATION

(11) **EP 4 726 008 A1**
(43) Date of publication of application: **15.04.2026**
(21) Application number: 23940796.8
(22) Date of filing: 28.12.2023
(51) Int. Cl.: C09K 3/18, C08F 8/12, C08F 212/36, C08F 220/28, C08F 265/06, C08L 33/00, C08L 101/12, C09D 7/65, C09D 201/00, C09D 201/08, C09K 3/00

(54) **AGENT FOR IMPARTING HYDROPHILICITY-SUSTAINING EFFECT AND/OR WATER SLIDING PROPERTIES**

(30) Priority: 08.06.2023 JP 2023094540; 26.09.2023 JP 2023162888
(71) Applicant: Nippon Shokubai Co., Ltd., Osaka-shi, Osaka 541-0043 (JP)
(72) Inventor: KASHIHARA, Miyato, Suita-shi, Osaka 564-0034 (JP); KISE, Koki, Suita-shi, Osaka 564-0034 (JP)
(74) Representative: Müller-Boré & Partner Patentanwälte PartG mbB
(86) International application number: PCT/JP2023/047171
(87) International publication number: WO 2024/252703

(57) **Abstract**

An object of the present invention is to provide an agent for imparting a hydrophilicity sustaining effect and/or water sliding properties capable of forming a tangible object such as a coating film having good hydrophilicity sustaining properties after repeated adhesion of low-ion water such as pure water and drying, and/or capable of forming a tangible object such as a coating film having good hydrophilicity and water sliding properties. The agent for imparting a hydrophilicity sustaining effect and/or water sliding properties includes, as a constituent component, particles including a crosslinked polymer having a -COOR group (R represents a hydrocarbon group, a hydrogen atom, an alkali metal atom or ammonium) and a hydroxy group.

## Description

### Technical Field

The present invention relates to an agent for imparting a hydrophilicity sustaining effect and/or water sliding properties.

### Background Art

A heat exchanger has a heat exchange plate such as a fin made of aluminum (an aluminum fin) for exchanging heat between a heat medium and the air. Moisture in the air is sometimes condensed on a surface of the aluminum fin during operation of the heat exchanger, and when the condensed water generated thereby becomes water droplets and bridges between the fins, an increase in power consumption due to ventilation resistance, and a trouble such as scattering of the water droplets may occur. In order to prevent such bridging by the condensed water, the surface of the fin material is often subjected to a hydrophilization treatment.

As the hydrophilization treatment, a method of forming a hydrophilic coating film by coating the surface of the fin material with a resin composition containing hydrophilic particles in a resin is known. Inorganic particles such as silica and organic particles such as acrylic-based particles have been typically used as hydrophilic particles. In addition, Patent Documents 1 and 2 describe use, as hydrophilic particles, of hydrophilic crosslinked polymer fine particles composed of a copolymer of (a) from 2 to 50 wt.% of a hydrophilic monomer having a polymerizable double bond and a polyoxyalkylene chain or a polyvinylpyrrolidone chain, (b) from 20 to 97 wt.% of a (meth)acrylamide-based monomer, (c) from 1 to 30 wt.% of a crosslinkable unsaturated monomer, (d) from 2 to 50 wt.% of a carboxy group-containing polymerizable unsaturated monomer, and (e) from 0 to 50 wt.% of an additional polymerizable monomer.

In addition, the surface of the aluminum fin kept wet by the condensed water may cause various problems such as a decrease in heat exchange efficiency, corrosion of the aluminum fin, propagation of bacteria and the like, and frosting. In order to solve the problem, it is important to facilitate drainage of the condensed water on the surface of the aluminum fin, that is, it is important to enhance water sliding properties of the surface of the aluminum fin.

In order to improve drainage (water sliding properties) of the condensed water, it is also known to perform a water repellent treatment on the surface of the aluminum fin. For example, Patent Document 3 discloses that a super water-repellent and oil-repellent heat exchange member having excellent water sliding properties can be obtained by providing a plurality of sugar star candy-shaped protrusions made of silica or the like on a surface of a base material, and then forming a water-repellent, oil-repellent, and antifouling thin film on the surface of the base material on which the sugar star candy-shaped protrusions are formed. In addition, Patent Document 4 discloses that a member for a heat exchanger excellent in both water repellency and water sliding properties can be obtained by applying a structure having a sliding-down water repellent layer containing a polymer having a polyethyleneimine skeleton, a fluorine-containing compound, and silica on a base material.

On the other hand, Patent Document 5 describes that a treatment agent obtained by blending a specific water-soluble resin (A), colloidal silica (B), an organoalkoxysilane and/or a hydrolysate thereof (C), a crosslinking agent (D) capable of crosslinking with the water-soluble resin (A), and water (E) at a predetermined weight ratio is used as a surface treatment agent for an aluminum-containing metal heat exchanger, whereby the surface of an aluminum fin can be hydrophilized to prevent bridging by condensed water, and drainage can also be enhanced.

### Citation List

### Patent Document

Patent Document 1: JP H9-87576 A
Patent Document 2: JP 2000-328038 A
Patent Document 3: JP 2013-92289 A
Patent Document 4: WO 2020/213485
Patent Document 5: WO 2014/147782

### Summary of Invention

### Technical Problem

The present invention aims to solve the following first and/or second problem(s).

### First Problem

The hydrophilic coating film is required to have not only enhanced hydrophilicity (initial hydrophilicity) immediately after the formation of the coating film but also sustained hydrophilicity. In addition, not only hydrophilization of a fin material and a coating film or the like to be applied to the surface thereof (hereinafter, these materials having shapes being referred to as tangible objects), but also hydrophilicity (initial hydrophilicity) of various tangible objects themselves or the surfaces thereof may be required for various applications, and the hydrophilicity may also be required to be sustained. In particular, the fin material of the heat exchanger repeats a wet state in which the condensed water is present on the surface of the fin material and a dry state in which the condensed water evaporates, through long-term use. Therefore, hydrophilic tangible objects such as the hydrophilic coating film to be applied to the fin material of the heat exchanger are required to have sustained hydrophilicity even after repeated adhesion of condensed water and drying.

However, when known silica or acrylic-based particles are used as the hydrophilic particles in the hydrophilization treatment, the hydrophilicity sustaining properties of the tangible objects after repeated adhesion of condensed water and drying may be insufficient.

In addition, Patent Documents 1 and 2 describe that hydrophilicity is sustained even after repeated adhesion of tap water and drying. However, the condensed water adhering to the fin of the heat exchanger has a low content of ionic components (hereinafter, referred to as "low-ion water") similarly to pure water, and when the hydrophilic particles described in Patent Documents 1 and 2 are used, the hydrophilicity sustaining properties after repeated adhesion of the low-ion water and drying are insufficient.

Furthermore, the hydrophilic particles described in Patent Documents 1 and 2 require the use of an organic solvent in the production thereof, and the (meth)acrylamide-based monomer which is a main component of the hydrophilic particles has high toxicity, and is not preferable from the viewpoint of reducing the environmental load and from the viewpoint of safety.

In addition, since Patent Documents 3 and 4 are techniques relating to a water repellent treatment, the effect of hydrophilicity sustaining properties cannot be expected.

In addition, in Patent Document 5, the hydrophilicity sustaining properties after repeated adhesion of condensed water and drying are not studied at all.

Accordingly, a first object of the present invention is to provide an agent for imparting a hydrophilicity sustaining effect capable of forming a hydrophilized tangible object (for example, a coating film) having good hydrophilicity sustaining properties after repeated adhesion of low-ion water such as pure water and drying (hereinafter sometimes referred to as "after wet/dry cycle").

In addition, for a tangible object (for example, a fin material of a heat exchanger) placed in an indoor environment, oil stains containing as main components oily components (for example, higher fatty acids, higher alcohols, and the like) derived from floating substances volatilized and scattered from building materials, foods, daily necessities, and the like may adhere to the surface of the tangible object, and even after such oil stains adhere to the surface of the tangible object, the tangible object is required to be able to exhibit good hydrophilicity. Therefore, a preferable object of the present invention, which is not essential, is to provide an agent for imparting a hydrophilicity sustaining effect that provides good hydrophilicity of the surface of a tangible object (for example, a fin material) even after oil stain adhesion.

### Second Problem

As described above, the aluminum fin in the heat exchanger is required to have good drainage (water sliding properties) of liquid droplets in some cases.

However, in Patent Documents 1 and 2, the water sliding properties of liquid droplets are not studied at all.

In addition, as described in Patent Documents 3 and 4, the water sliding properties of liquid droplets are enhanced by enhancing the water repellency of the surface of the base material, but an increase in contact angle is likely to cause generation of tall liquid droplets in the vertical direction with respect to the base material, and a problem of bridging between the fins by the liquid droplets occurs. In particular, in recent years, the fin interval has been extremely narrowed for the purpose of improving the heat dissipation efficiency or cooling efficiency of the heat exchanger, and it has been required to achieve both hydrophilicity for suppressing bridging between the fins and water sliding properties for improving drainage of liquid droplets.

In addition, the surface treatment agent described in Patent Document 5 is described as having been able to achieve both hydrophilicity and drainage (water sliding properties), but colloidal silica is used as hydrophilic particles, and in this case, the hydrophilicity sustaining properties tend to be insufficient. In addition, there is a concern about an odor peculiar to silica and mold abrasion caused by silica which is a hard inorganic material, and therefore, development of a new surface treatment agent is required.

Accordingly, a second object of the present invention is to provide a novel agent for imparting water sliding properties, which is capable of forming a tangible object (for example, a coating film) having good hydrophilicity and water sliding properties.

The present invention aims to solve at least one of the first and second problems, and in a preferred aspect, aims to solve both the first and second problems.

### Solution to Problem

As a result of intensive studies to solve the above problems, the present inventors have found that the hydrophilicity sustaining properties after a wet/dry cycle can be enhanced by using particles containing a crosslinked polymer having a specific functional group.

The present inventors have also found that the use of the particles can enhance not only the hydrophilicity but also the water sliding properties.

Accordingly, the present invention includes the following inventions.
[1] An agent for imparting a hydrophilicity sustaining effect and/or a water sliding property, the agent including, as a constituent component, particles including a crosslinked polymer having a -COOR group (where R represents a hydrocarbon group, a hydrogen atom, an alkali metal atom or ammonium) and a hydroxy group.
[2] The agent for imparting a hydrophilicity sustaining effect and/or a water sliding property according to [1], in which the crosslinked polymer includes a structural unit derived from a monomer (AB1) having, in one molecule, one or more -COOR groups, one or more hydroxy groups, and one polymerizable group, and a structural unit derived from a monomer (C) having, in one molecule, two or more polymerizable groups.
[3] The agent for imparting a hydrophilicity sustaining effect and/or a water sliding property according to [2], in which the structural unit derived from the monomer (AB1) is a structural unit represented by Formula (1) described below, and the structural unit derived from the monomer (C) is a structural unit derived from a polyfunctional ethylenically unsaturated monomer: 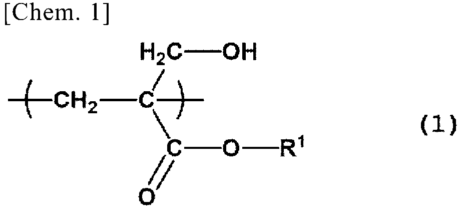 where R¹ represents an alkyl group having from 1 to 4 carbon atoms, a hydrogen atom, an alkali metal atom, or ammonium.
[4] The agent for imparting a hydrophilicity sustaining effect and/or a water sliding property according to [3], in which the crosslinked polymer includes the structural unit represented by Formula (1) described above, where R¹ is an alkali metal atom or ammonium.
[5] The agent for imparting a hydrophilicity sustaining effect and/or a water sliding property according to any one of [2] to [4], in which a content of the structural unit derived from the monomer (AB1) is 5 mass% or more in the crosslinked polymer.
[6] The agent for imparting a hydrophilicity sustaining effect and/or a water sliding property according to any one of [2] to [5], in which a content of the structural unit derived from the monomer (C) is from 0.01 to 70 mass% in the crosslinked polymer.
[7] The agent for imparting a hydrophilicity sustaining effect and/or a water sliding property according to any one of [2] to [6], in which the crosslinked polymer further includes a structural unit derived from a polyoxyalkylene group-containing ethylenically unsaturated monomer.
[8] The agent for imparting a hydrophilicity sustaining effect and/or a water sliding property according to any one of [1] to [7], in which the particles have a volume average particle size of from 10 nm to 10 µm.
[9] The agent for imparting a hydrophilicity sustaining effect and/or a water sliding property according to any one of [1] to [8], in which the particles are single-layer particles including the crosslinked polymer, or core-shell structured particles including the crosslinked polymer in a shell layer.
[10] The agent for imparting a hydrophilicity sustaining effect and/or a water sliding property according to any one of [1] to [9], the agent being used for a fin material of a heat exchanger.
[11] The agent for imparting a hydrophilicity sustaining effect and/or a water sliding property according to [10], in which the fin material is used for an aluminum fin material.
[12] A resin composition including a hydrophilic resin and the agent for imparting a hydrophilicity sustaining effect and/or a water sliding property described in any one of [1] to [11]
[13] The resin composition according to [12], in which the hydrophilic resin is a resin having at least one polar functional group selected from the group consisting of a carboxy group and a salt of a carboxy group in a side chain.
[14] The resin composition according to [12] or [13], further including a crosslinking agent.
[15] A method for applying sustained hydrophilization and/or water sliding to a tangible object, the method including incorporating, into the tangible object, particles including a crosslinked polymer having a -COOR group (where R represents a hydrocarbon group, a hydrogen atom, an alkali metal atom or ammonium) and a hydroxy group.
[16] A method for applying sustained hydrophilization and/or water sliding to a surface of a base material, the method including coating the base material with a composition including particles including a crosslinked polymer having a -COOR group (where R represents a hydrocarbon group, a hydrogen atom, an alkali metal atom or ammonium) and a hydroxy group, to form a coating film including the particles on the surface of the base material.
[17] The method according to [16], in which the base material is a fin material of a heat exchanger.
[18] The method according to [16] or [17], in which the composition further includes a hydrophilic resin.
[19] The method according to [18], in which the hydrophilic resin is a resin having at least one polar functional group selected from the group consisting of a carboxy group and a salt of a carboxy group in a side chain.
[20] The method according to any one of [16] to [19], in which the composition further includes a crosslinking agent.
[21] The method according to any one of [15] to [20], in which the crosslinked polymer includes a structural unit derived from a monomer (AB1) having, in one molecule, one or more -COOR groups, one or more hydroxy groups, and one polymerizable group, and a structural unit derived from a monomer (C) having, in one molecule, two or more polymerizable groups.
[22] The method according to [21], in which the structural unit derived from the monomer (AB1) is a structural unit represented by Formula (1) described below, and the structural unit derived from the monomer (C) is a structural unit derived from a polyfunctional ethylenically unsaturated monomer: 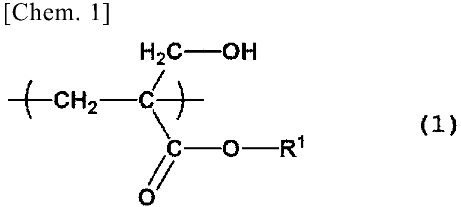 where R¹ represents an alkyl group having from 1 to 4 carbon atoms, a hydrogen atom, an alkali metal atom, or ammonium.
[23] The method according to [22], in which the crosslinked polymer includes the structural unit represented by Formula (1) described above, where R¹ is an alkali metal atom or ammonium.
[24] The method according to any one of [21] to [23], in which the content of the structural unit derived from the monomer (AB1) is 5 mass% or more in the crosslinked polymer.
[25] The method according to any one of [21] to [24], in which the content of the structural unit derived from the monomer (C) is from 0.01 to 70 mass% in the crosslinked polymer.
[26] The method according to any one of [21] to [25], in which the crosslinked polymer further includes a structural unit derived from a polyoxyalkylene group-containing ethylenically unsaturated monomer.
[27] The method according to any one of [15] to [26], in which the particles have a volume average particle size of from 10 nm to 10 µm.
[28] The method according to any one of [15] to [27], in which the particles are single-layer particles including the crosslinked polymer, or core-shell structured particles including the crosslinked polymer in a shell layer.

### Advantageous Effects of Invention

The present invention can provide the following first and/or second effects.

First Effect: The particles of the present invention can be used to enhance the hydrophilicity sustaining properties of the resulting tangible object after the wet/dry cycle. In addition, the hydrophilicity of the tangible object after oil stain adhesion can be preferably enhanced.

Second Effect: The particles of the present invention can be used to impart hydrophilicity and water sliding properties to the resulting tangible object.

Further, the agent for imparting a hydrophilicity sustaining effect and/or water sliding properties containing the particles of the present invention as a constituent component is preferred also in that the use of an organic solvent (particularly an organic solvent immiscible with water) or a highly toxic monomer is not essential in the production thereof.

### Brief Description of Drawings

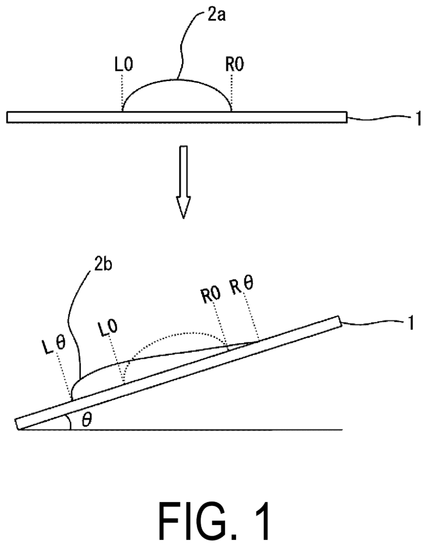

FIG. 1 is a schematic view illustrating a method for measuring a sliding-down angle.

### Description of Embodiments

The present invention will be described in detail below. Hereinafter, a coating film will be described as an example of the tangible object, but the tangible object is not limited to a coating film as described below.

### 1. Agent for Imparting Hydrophilicity Sustaining Effect and/or Water Sliding Properties

### Polymer Particle

The agent for imparting a hydrophilicity sustaining effect and/or water sliding properties of the present invention contains, as a constituent component, particles containing a crosslinked polymer having a -COOR group (where R represents a hydrocarbon group, a hydrogen atom, an alkali metal atom, or ammonium) and a hydroxy group (hereinafter, sometimes simply referred to as "polymer particles"). The crosslinked polymer constituting the polymer particles has a -COOR group and a hydroxy group, and thus can exhibit excellent hydrophilic properties (initial hydrophilicity, hydrophilicity sustaining properties after a wet/dry cycle, hydrophilicity after oil stain adhesion, and the like). In addition, the crosslinked polymer has a -COOR group and a hydroxy group, and thus can exhibit excellent hydrophilicity and excellent water sliding properties. Furthermore, the polymer having a -COOR group and a hydroxy group is a crosslinked polymer, and thus the elution of the agent for imparting a hydrophilicity sustaining effect and/or water sliding properties into water can be prevented, and the sustaining properties of the hydrophilic properties and the water sliding properties can be enhanced. In addition, the agent for imparting a hydrophilicity sustaining effect and/or water sliding properties of the present invention is preferred also in that the above effects can be achieved without using silica particles having a concern about odor or mold wear.

In the present invention, the "crosslinked polymer" refers to a polymer having a crosslinked structure, and the crosslinked structure can be introduced into the crosslinked polymer by (co)polymerizing a monomer having two or more polymerizable groups in one molecule, that is, the crosslinked polymer can be said to be a polymer including a structural unit derived from a monomer having two or more polymerizable groups in one molecule.

The hydrocarbon group represented by R may be an aliphatic hydrocarbon group, an aromatic hydrocarbon group, or a group obtained by combining these groups.

Examples of the aliphatic hydrocarbon group include:
alkyl groups (preferably alkyl groups having from 1 to 4 carbon atoms) such as a methyl group, an ethyl group, an n-propyl group, an isopropyl group, an n-butyl group, an isobutyl group, and a tert-butyl group;
alkenyl groups (preferably alkenyl groups having from 2 to 6 carbon atoms) such as a vinyl group, an n-propenyl group, an isopropenyl group, a 1-butenyl group, a 2-butenyl group, a 1-pentenyl group, a 2-pentenyl group, a 2-methyl-1-butenyl group, a 2-methyl-2-butenyl group, and a 3-methyl-1-butenyl group; and
cycloalkyl groups (preferably cycloalkyl groups having from 3 to 8 carbon atoms) such as a cyclopropyl group, a cyclobutyl group, a cyclopentyl group, a cyclohexyl group, a 3-methylcyclohexyl group, a 4-methylcyclohexyl group, and a 4-ethylcyclohexyl group.

Examples of the aromatic hydrocarbon group include a phenyl group, a methylphenyl group, a dimethylphenyl group, a trimethylphenyl group, a 4-tert-butylphenyl group, and a naphthyl group, and an aromatic hydrocarbon group having from 6 to 10 carbon atoms is preferable.

Examples of the group obtained by combining an aliphatic hydrocarbon group and an aromatic hydrocarbon group include aralkyl groups such as a benzyl group and a phenethyl group, and an aralkyl group having from 7 to 12 carbon atoms is preferable.

The hydrocarbon group represented by R is preferably an alkyl group, more preferably an alkyl group having from 1 to 4 carbon atoms, still more preferably an alkyl group having from 1 to 2 carbon atoms, and particularly preferably a methyl group.

Examples of the alkali metal atom represented by R include lithium, sodium, and potassium, and sodium and potassium are preferable, and sodium is more preferable.

The ammonium represented by R is not limited to NH₄⁺, and the meaning of the ammonium is defined as including organic ammonium. Examples of the organic ammonium include quaternary ammonium such as tetraalkylammonium (preferably tetra-C₁₋₁₀ alkylammonium) such as tetramethylammonium and tetrabutylammonium; and ammonium (primary to tertiary ammonium) formed by protonating an amine. Examples of the amine include trialkylamines (preferably tri-C₁₋₁₀ alkylamines) such as trimethylamine, triethylamine and tributylamine; hydroxyalkylamines (preferably mono-, di- or tri-(hydroxy C₁₋₁₀ alkyl) amines) such as monoethanolamine, diethanolamine, and triethanolamine. Examples of the ammonium represented by R include NH₄⁺ and primary to quaternary ammonium, and preferred is a tetraalkylammonium (preferably tetra-C₁₋₁₀ alkylammonium) such as tetramethylammonium or tetrabutylammonium; a trialkylammonium (preferably tri-C₁₋₁₀ alkylammonium) such as trimethylammonium, triethylammonium, or tributylammonium; a hydroxyalkylammonium (preferably mono-, di-, or tri-(hydroxy-C₁₋₁₀ alkyl)ammonium) such as monoethanolammonium, diethanolammonium, or triethanolammonium; or NH₄⁺.

The crosslinked polymer may have a single type of -COOR group or may have a plurality of types of -COOR groups. When the crosslinked polymer has a single type of -COOR group, the above-described R is preferably a hydrogen atom, an alkali metal atom, or ammonium, and more preferably an alkali metal atom or ammonium. In addition, when the crosslinked polymer has a plurality of types of -COOR groups, the above-described R is preferably a combination of one or more selected from a hydrogen atom, an alkali metal atom, and ammonium with a hydrocarbon group (particularly, an alkyl group having from 1 to 4 carbon atoms), and more preferably a combination of one or more selected from an alkali metal atom and ammonium with a hydrocarbon group (particularly, an alkyl group having from 1 to 4 carbon atoms). A total proportion of R, which is a hydrogen atom, an alkali metal atom, or ammonium, (hereinafter, referred to as "percentage of ionization") in 100 mol% of the total R contained in the crosslinked polymer is, for example, from 20 to 100 mol%, preferably from 40 to 100 mol%, and more preferably from 50 to 100 mol%. By adjusting the percentage of ionization to the above range, the hydrophilic properties and the water sliding properties become more favorable. An upper limit of the percentage of ionization may be 95 mol% or less, or may be 90 mol% or less.

A hydroxy value of the crosslinked polymer is preferably from 20 to 500 mgKOH/g, more preferably from 40 to 480 mgKOH/g, and still more preferably from 70 to 450 mgKOH/g.

The hydroxy value means an amount (mg) of potassium hydroxide having the same substance amount as the substance amount of hydroxy groups contained in 1 g of the crosslinked polymer.

When the composition of the crosslinked polymer is known, the hydroxy value of the crosslinked polymer can be calculated by determining the amount of hydroxy groups contained in the monomer components used as the raw materials for the crosslinked polymer. For example, when a crosslinked polymer prepared by polymerizing a monomer component containing 1 mass% of 2-hydroxyethyl methacrylate as a monomer having a hydroxy group is taken as an example, the hydroxy value of the crosslinked polymer can be determined based on the equation: [hydroxy value of crosslinked polymer] = [0.01 (content of 2-hydroxyethyl methacrylate in monomer components used as raw materials for crosslinked polymer on a mass basis)/130 (molecular weight of 2-hydroxyethyl methacrylate) × 1 (number of hydroxy groups in one molecule of 2-hydroxyethyl methacrylate)] × 56.1 (substance amount of potassium hydroxide) × 1000 = 4.3 mgKOH/g.

In addition, in a case where the composition of the crosslinked polymer is not known, the hydroxy value can be determined by determining the amount (mg) of potassium hydroxide (KOH) required for neutralizing acetic acid bonded to a hydroxy group when 1 g of the crosslinked polymer is acetylated in accordance with JIS K0070.

The hydroxy value of the crosslinked polymer can be easily adjusted by adjusting the amount of the monomer having a hydroxy group contained in the monomer component used as a raw material for the crosslinked polymer.

A proportion of the -COOR group contained in the crosslinked polymer is preferably from 10 to 300 mol, more preferably from 30 to 200 mol, still more preferably from 50 to 150 mol, and particularly preferably from 80 to 120 mol, per 100 mol of the hydroxy group contained in the crosslinked polymer.

As described above, the crosslinked polymer contains a structural unit derived from a monomer having two or more polymerizable groups in one molecule. Examples of the monomer having two or more polymerizable groups in one molecule include monomers having two or more ethylenically unsaturated bonds, and a monomer having two or more ethylenically unsaturated bonds at a terminal, that is, a monomer having two or more CH₂=C< groups is preferable. That is, the polymerizable group is preferably an ethylenically unsaturated bond-containing group such as a vinyl group, an allyl group, or a (meth)acryloyl group.

Specific examples of the monomer having two or more polymerizable groups in one molecule include monomers exemplified as a monomer (A2), a monomer (B2), a monomer (AB2), and a monomer (C) described below, and, among these, the monomer (C) is preferable.

A content of the structural unit derived from the monomer having two or more polymerizable groups in one molecule (preferably the structural unit derived from the monomer (C)) is, for example, from 0.01 to 70 mass%, preferably from 0.01 to 35 mass%, more preferably from 1 to 25 mass%, and still more preferably from 5 to 20 mass% in the crosslinked polymer. By adjusting the content of the structural unit derived from the monomer having two or more polymerizable groups in one molecule to the above range, the hydrophilicity sustaining effect and the water sliding properties tend to be further enhanced.

The crosslinked polymer is preferably a crosslinked polymer of any one of Aspects 1 to 4 below, more preferably a crosslinked polymer of Aspect 1, Aspect 2, or Aspect 4, and particularly preferably a crosslinked polymer of Aspect 4. R in the -COOR group in Aspects 1 to 4 below is the same as described above, and preferred aspects thereof are also the same.
Aspect 1: A crosslinked polymer including a structural unit derived from a monomer (hereinafter, monomer (A1)) having one or more -COOR groups and one polymerizable group and having no hydroxy group in one molecule, a structural unit derived from a monomer (hereinafter, monomer (B1)) having one or more hydroxy groups and one polymerizable group and having no - COOR group in one molecule, and a structural unit derived from a monomer (C) (hereinafter, monomer (C)) having two or more polymerizable groups in one molecule
Aspect 2: A crosslinked polymer including a structural unit derived from a monomer (A1) and/or a monomer (hereinafter, monomer (A2)) having one or more -COOR groups and two or more polymerizable groups and having no hydroxy group in one molecule, and a structural unit derived from a monomer (B1) and/or a monomer (hereinafter, monomer (B2)) having one or more hydroxy groups and two or more polymerizable groups and having no -COOR group in one molecule, in which the crosslinked polymer includes at least the structural units derived from the monomer (A2) and/or the monomer (B2)
Aspect 3: A crosslinked polymer including a structural unit derived from a monomer (hereinafter, monomer (AB2)) having one or more -COOR groups, one or more hydroxy groups, and two or more polymerizable groups in one molecule
Aspect 4: A crosslinked polymer including a structural unit derived from a monomer (hereinafter, monomer (AB1)) having one or more -COOR groups, one or more hydroxy groups, and one polymerizable group in one molecule and a structural unit derived from a monomer (C)

In the present specification, the "structural unit derived from a predetermined monomer" refers to a structural unit having the same structure as a structure formed by polymerization of the predetermined monomer, and is usually a structure in which a carbon-carbon double bond contained in the predetermined monomer is replaced with a carbon-carbon single bond and two bonds bonded to the respective carbon atoms. The structural unit derived from the predetermined monomer does not need to be a structural unit formed by actually polymerizing the predetermined monomer, and a structural unit formed by a method other than polymerization of the predetermined monomer (for example, a structural unit formed through a reaction such as hydrolysis or neutralization after polymerization) is also included in the structural unit derived from the predetermined monomer as long as the structural unit has the same structure as the structure formed by polymerization of the predetermined monomer.

The number of -COOR groups contained in one molecule of the monomer (A1) is preferably from 1 to 3, and more preferably 1.

The polymerizable group contained in the monomer (A1) is preferably an ethylenically unsaturated bond-containing group such as a vinyl group, an allyl group, or a (meth)acryloyl group, more preferably a (meth)acryloyl group.

Examples of the monomer (A1) include carboxy group-containing monofunctional monomers, salts of carboxy group-containing monofunctional monomers, and (meth)acrylate-based monomers.

Specific examples of the carboxy group-containing monofunctional monomer include unsaturated monocarboxylic acids such as (meth)acrylic acid and crotonic acid; and unsaturated dicarboxylic acids such as maleic acid, fumaric acid, and itaconic acid. Among these, unsaturated monocarboxylic acids are preferable, (meth)acrylic acid is more preferable, and acrylic acid is particularly preferable.

Examples of the salt of the carboxy group-containing monofunctional monomer include an alkali metal salt of the carboxy group-containing monofunctional monomer and an ammonium salt of the carboxy group-containing monofunctional monomer. In the salt of the carboxy group-containing monofunctional monomer, specific examples of the alkali metal atom and ammonium that form a salt with the carboxy group-containing monofunctional monomer are the same as the examples of the alkali metal atom and ammonium represented by R described above, and preferred aspects thereof are also the same. Among them, salts of unsaturated monocarboxylic acids are preferable, and salts of acrylic acids are more preferable.

Specific examples of the (meth)acrylate-based monomer include alkyl (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, 2-ethylhexyl (meth)acrylate, and lauryl (meth)acrylate; aryl (meth)acrylates such as phenyl (meth)acrylate; and aralkyl (meth)acrylates such as benzyl (meth)acrylate, and among these, alkyl (meth)acrylates are preferable, C₁₋₁₀ alkyl (meth)acrylates are more preferable, and C₁₋₄ alkyl (meth)acrylates are still more preferable.

The number of -COOR groups contained in one molecule of the monomer (A2) is preferably from 1 to 3, and more preferably 1.

The number of polymerizable groups contained in the monomer (A2) is preferably from 2 to 6, and more preferably 2.

The polymerizable group contained in the monomer (A2) is preferably an ethylenically unsaturated bond-containing group such as a vinyl group, an allyl group, or a (meth)acryloyl group, more preferably a (meth)acryloyl group.

Examples of the monomer (A2) include dimethyl 1-benzyl-3,4-divinyl-1H-pyrrole-2,5-dicarboxylate, and 1,1'-[2-[(ethoxycarbonyl)oxy]-1,3-propanediyl]bis(2-methyl-2-propenoate).

The number of hydroxy groups contained in one molecule of the monomer (B1) is preferably from 1 to 3, and more preferably 1.

The polymerizable group contained in the monomer (B1) is preferably an ethylenically unsaturated bond-containing group such as a vinyl group, an allyl group, or a (meth)acryloyl group, more preferably a (meth)acryloyl group.

Specific examples of the monomer (B1) include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, and 4-hydroxybutyl (meth)acrylate, and among these, C₁₋₈ hydroxyalkyl (meth)acrylates are preferable, and C₁₋₄ hydroxyalkyl (meth)acrylates are more preferable.

The number of hydroxy groups contained in one molecule of the monomer (B2) is preferably from 1 to 3, and more preferably 1.

The number of polymerizable groups contained in one molecule of the monomer (B2) is preferably from 2 to 6, and more preferably 2.

The polymerizable group contained in the monomer (B2) is preferably an ethylenically unsaturated bond-containing group such as a vinyl group, an allyl group, or a (meth)acryloyl group, more preferably a (meth)acryloyl group.

Specific examples of the monomer (B2) include an ester of a polyol having n (where n is an integer of 3 or more, preferably an integer of from 3 to 6) hydroxy groups and from 2 to (n-1) (meth)acrylic acids, such as pentaerythritol tri(meth)acrylate and dipentaerythritol penta(meth)acrylate, or a divinyl compound having a hydroxy group as represented by a formula described below.

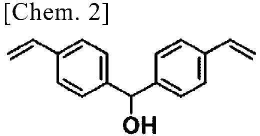

The polymerizable group contained in the monomer (C) is preferably an ethylenically unsaturated bond-containing group such as a vinyl group, an allyl group, or a (meth)acryloyl group, more preferably a vinyl group or a methacryloyl group, and particularly preferably a vinyl group.

The monomer (C) has a molecular weight of preferably 50 or more and 1000 or less, and more preferably 100 or more and 400 or less.

The monomer (C) is preferably a polyfunctional ethylenically unsaturated monomer having two or more ethylenically unsaturated bond-containing groups, such as a hydrocarbon crosslinkable monomer, a divinyl ether-based monomer, a diallyl ether-based monomer, or a polyvalent (meth)acrylic acid ester.

Examples of the hydrocarbon crosslinkable monomer include aromatic hydrocarbon crosslinkable monomers such as divinylbenzene, trivinylbenzene, divinylnaphthalene, divinyltoluene, and divinylxylene; alicyclic hydrocarbon crosslinkable monomers such as trivinylcyclohexane; and chain hydrocarbon crosslinkable monomers such as 1,3-butadiene.

Examples of the divinyl ether-based monomer include dialkylene glycol divinyl ethers such as diethylene glycol divinyl ether, dipropylene glycol divinyl ether, and dibutylene glycol divinyl ether (preferably, di-C₁₋₄ alkylene glycol divinyl ether); and polyalkylene glycol divinyl ethers such as polyethylene glycol divinyl ether, polypropylene glycol divinyl ether, and polybutylene glycol divinyl ether (preferably, poly-C₁₋₄ alkylene glycol divinyl ether). The number of repetitions of the alkylene glycol unit in the polyalkylene glycol divinyl ether is not particularly limited, but is preferably from 3 to 10, and more preferably from 3 to 5.

Examples of the diallyl ether-based monomer include dialkylene glycol diallyl ethers such as diethylene glycol diallyl ether, dipropylene glycol diallyl ether, and dibutylene glycol diallyl ether (preferably, di-C₁₋₄ alkylene glycol diallyl ether); and polyalkylene glycol diallyl ethers such as polyethylene glycol diallyl ether, polypropylene glycol diallyl ether, and polybutylene glycol diallyl ether (preferably, poly-C₁₋₄ alkylene glycol diallyl ether). The number of repetitions of the alkylene glycol unit in the polyalkylene glycol diallyl ether is not particularly limited, but is preferably from 3 to 10, and more preferably from 3 to 5.

Examples of the polyvalent (meth)acrylic acid ester include (meth)acrylic acid diesters of mono -, di -, or poly-alkylene glycols such as ethylene glycol di(meth)acrylate, diethylene glycol di(meth)acrylate, triethylene glycol di(meth)acrylate, tetraethylene glycol di(meth)acrylate, 1,6-hexanediol di(meth)acrylate, and neopentyl glycol di(meth)acrylate (preferably, (meth)acrylic acid diesters of mono -, di -, or poly-C₂₋₄ alkylene glycols), (meth)acrylic acid triesters of polyols such as trimethylolpropane tri(meth)acrylate and pentaerythritol tri(meth)acrylate, (meth)acrylic acid tetraesters of polyols such as pentaerythritol tetra(meth)acrylate, (meth)acrylic acid pentaesters of polyols such as dipentaerythritol penta(meth)acrylate, and (meth)acrylic acid hexaesters of polyols such as dipentaerythritol hexa(meth)acrylate. The number of repetitions of the alkylene glycol unit in the (meth) acrylic acid diester of the polyalkylene glycol is not particularly limited, but is preferably from 3 to 10, and more preferably from 3 to 5.

Among these, polyvalent methacrylic acid esters such as methacrylic acid diesters of mono -, di -, or poly-alkylene glycols, methacrylic acid triesters of polyols, methacrylic acid tetraesters of polyols, methacrylic acid pentaesters of polyols, and methacrylic acid hexaesters of polyols are preferable because they have high resistance to hydrolysis, prevent elution of constituent components of particles such as hydrophilic components, and tend to enhance the hydrophilicity sustaining effect and/or water sliding properties.

Among the polyfunctional ethylenically unsaturated monomers, hydrocarbon crosslinkable monomers and polyvalent (meth)acrylic acid esters are preferable. In particular, from the viewpoint of having high resistance to hydrolysis and a tendency to further enhance the hydrophilicity sustaining effect and/or the water sliding properties, a hydrocarbon crosslinkable monomer and a polyvalent methacrylic acid ester are more preferable, an aromatic hydrocarbon crosslinkable monomer and a methacrylic acid diester of mono -, di -, or poly-alkylene glycol are still more preferable, and divinylbenzene is particularly preferable.

The number of -COOR groups contained in one molecule of the monomer (AB1) is preferably from 1 to 3, and more preferably 1.

The number of hydroxy groups contained in one molecule of the monomer (AB1) is preferably from 1 to 3, and more preferably 1.

The polymerizable group contained in the monomer (AB1) is preferably an ethylenically unsaturated bond-containing group such as a vinyl group, an allyl group, or a (meth)acryloyl group, more preferably a group having an ethylenically unsaturated group at a terminal (a group having CH₂=C<), and still more preferably a (meth)acryloyl group.

The monomer (AB1) is preferably a hydroxymethylacrylic acid-based monomer represented by Formula (2) described below. 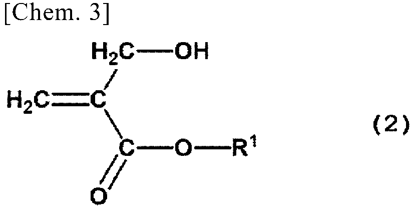 where R¹ represents an alkyl group having from 1 to 4 carbon atoms, a hydrogen atom, an alkali metal atom, or ammonium.

Examples of the alkyl group having from 1 to 4 carbon atoms represented by R¹ in Formula (2) described above include a methyl group, an ethyl group, an n-propyl group, an isopropyl group, an n-butyl group, an isobutyl group, a sec-butyl group, and a tert-butyl group. An alkyl group having from 1 to 2 carbon atoms is preferable, and a methyl group is more preferable.

The alkali metal atom and ammonium represented by R¹ in Formula (2) described above are the same as those exemplified for the alkali metal atom and ammonium represented by R, and preferred aspects thereof are also the same.

The number of -COOR groups contained in one molecule of the monomer (AB2) is preferably from 1 to 3, and more preferably 1.

The number of hydroxy groups contained in one molecule of the monomer (AB2) is preferably from 1 to 3, and more preferably 1.

The number of polymerizable groups contained in one molecule of the monomer (AB2) is preferably from 2 to 6, and more preferably 2.

The polymerizable group contained in the monomer (AB2) is preferably an ethylenically unsaturated bond-containing group such as a vinyl group, an allyl group, or a (meth)acryloyl group, more preferably a (meth)acryloyl group.

Specific examples of the monomer (AB2) include methyl 3,4-diethenyl-5-(hydroxy-methyl)-1-(phenylmethyl)-1H-pyrrole-2-carboxylate, and methyl 3-hydroxy-3-(2-propen-1-yl)-5-hexenoate.

The crosslinked polymer of Aspect 1 above may contain a single type of structural unit derived from the monomer (A1), or may contain two or more types thereof. Also, the crosslinked polymer of Aspect 1 above may contain a single type of structural unit derived from the monomer (B1), or may contain two or more types thereof. Also, the crosslinked polymer of Aspect 1 above may contain a single type of structural unit derived from the monomer (C), or may contain two or more types thereof.

A content of the structural unit derived from the monomer (A1) in the crosslinked polymer of Aspect 1 above is preferably from 1 to 98.99 mass%, more preferably from 10 to 90 mass%, and still more preferably from 10 to 50 mass%.

A content of the structural unit derived from the monomer (B1) in the crosslinked polymer of Aspect 1 above is preferably from 1 to 98.99 mass%, more preferably from 10 to 90 mass%, and still more preferably from 10 to 50 mass%.

A content of the structural unit derived from the monomer (C) (preferably a polyfunctional ethylenically unsaturated monomer) in the crosslinked polymer of Aspect 1 above is preferably from 0.01 to 70 mass%, more preferably from 0.01 to 35 mass%, and still more preferably from 5 to 20 mass%.

In the crosslinked polymer of Aspect 1 above, a total content of the structural unit derived from the monomer (A1), the structural unit derived from the monomer (B1), and the structural unit derived from the monomer (C) is preferably from 20 to 100 mass%, more preferably from 30 to 100 mass%, and still more preferably from 50 to 100 mass%.

The crosslinked polymer of Aspect 1 above may further include a structural unit derived from an additional monomer other than the monomer (A1), the monomer (B1), and the monomer (C). Examples of the additional monomer include, in addition to the monomer (AB1), a polyoxyalkylene group-containing ethylenically unsaturated monomer, a styrene-based monomer, a vinyl ester-based monomer, a silane group-containing monomer, a nitrogen atom-containing monomer, an oxo group-containing monomer, a fluorine atom-containing monomer, an epoxy group-containing monomer, a photostabilizing monomer, and an ultraviolet-absorbing monomer, which are described later.

The crosslinked polymer of Aspect 2 above may contain a single type of structural unit derived from the monomer (A1), or may contain two or more types thereof. Also, the crosslinked polymer of Aspect 2 above may contain a single type of structural unit derived from the monomer (A2), or may contain two or more types thereof. Also, the crosslinked polymer of Aspect 2 above may contain a single type of structural unit derived from the monomer (B1), or may contain two or more types thereof. Also, the crosslinked polymer of Aspect 2 above may contain a single type of structural unit derived from the monomer (B2), or may contain two or more types thereof.

In the crosslinked polymer of Aspect 2 above, a total content of the structural unit derived from the monomer (A2) and the structural unit derived from the monomer (B2) is preferably from 0.01 to 70 mass%, more preferably from 0.01 to 35 mass%, and still more preferably from 5 to 20 mass%.

In the crosslinked polymer of Aspect 2 above, a total content of the structural unit derived from the monomer (A1), the structural unit derived from the monomer (A2), the structural unit derived from the monomer (B1), and the structural unit derived from the monomer (B2) is preferably from 20 to 100 mass%, more preferably from 30 to 100 mass%, and still more preferably from 50 to 100 mass%.

The crosslinked polymer of Aspect 2 above may further include a structural unit derived from an additional monomer other than the monomer (A1), the monomer (A2), the monomer (B1), and the monomer (B2). Examples of the additional monomer include, in addition to the monomer (C) that is not included in the monomer (A2) or the monomer (B2), the monomer (AB1), and the monomer (AB2), a polyoxyalkylene group-containing ethylenically unsaturated monomer, a styrene-based monomer, a vinyl ester-based monomer, a silane group-containing monomer, a nitrogen atom-containing monomer, an oxo group-containing monomer, a fluorine atom-containing monomer, an epoxy group-containing monomer, a photostabilizing monomer, and an ultraviolet-absorbing monomer, which are described later.

The crosslinked polymer of Aspect 3 above may contain a single type of structural unit derived from the monomer (AB2), or may contain two or more types thereof.

A content of the structural unit derived from the monomer (AB2) in the crosslinked polymer of Aspect 3 above is preferably from 0.01 to 100 mass%, more preferably from 5 to 70 mass%, and still more preferably from 10 to 50 mass%.

The crosslinked polymer of Aspect 3 above may further include a structural unit derived from an additional monomer other than the monomer (AB2). Examples of the additional monomer include, in addition to the monomer (A1), the monomer (A2), the monomer (B1), the monomer (B2), the monomer (C), and the monomer (AB 1), a polyoxyalkylene group-containing ethylenically unsaturated monomer, a styrene-based monomer, a vinyl ester-based monomer, a silane group-containing monomer, a nitrogen atom-containing monomer, an oxo group-containing monomer, a fluorine atom-containing monomer, an epoxy group-containing monomer, a photostabilizing monomer, and an ultraviolet-absorbing monomer, which are described later.

The crosslinked polymer of the present invention is preferably the crosslinked polymer of Aspect 4 including a structural unit derived from the monomer (AB1) and a structural unit derived from the monomer (C), and among them, a crosslinked polymer including a structural unit derived from a hydroxymethylacrylic acid-based monomer represented by Formula (2) and a structural unit derived from a polyfunctional ethylenically unsaturated monomer is particularly preferable. The crosslinked polymer of Aspect 4 above may contain a single type of structural unit derived from the monomer (AB1), or may contain two or more types thereof. Also, the crosslinked polymer of Aspect 4 may contain a single type of structural unit derived from the monomer (C), or may contain two or more types thereof.

The structural unit derived from the hydroxymethylacrylic acid-based monomer represented by Formula (2) can be rephrased as a structural unit represented by Formula (1) described below, that is, among the crosslinked polymers of Aspect 4, a crosslinked polymer including a structural unit represented by Formula (1) and a structural unit derived from a polyfunctional ethylenically unsaturated monomer is particularly preferable. 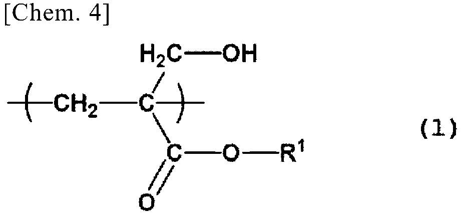 where R¹ represents an alkyl group having from 1 to 4 carbon atoms, a hydrogen atom, an alkali metal atom, or ammonium.

The alkyl group having from 1 to 4 carbon atoms, alkali metal atom, and ammonium represented by R¹ in Formula (1) described above are the same as those for R¹ in Formula (2) described above, and preferred aspects thereof are also the same.

In the case where R¹ is an alkali metal atom, it is contained in the crosslinked polymer as an alkali metal salt of carboxylic acid, and in the case where R¹ is ammonium, it is contained in the crosslinked polymer as an ammonium salt of carboxylic acid.

The crosslinked polymer of Aspect 4 above preferably has a plurality of structural units represented by Formula (1), and R¹s included in a plurality of Formulae (1) may be the same or different. In a case where all of R1s are the same, R¹ is preferably a hydrogen atom, an alkali metal atom, or ammonium, and more preferably an alkali metal atom or ammonium. In a case where different R¹s are present, R¹s are preferably a combination of one or more selected from a hydrogen atom, an alkali metal atom, and ammonium with an alkyl group having from 1 to 4 carbon atoms, and more preferably a combination of one or more selected from an alkali metal atom and ammonium with an alkyl group having from 1 to 4 carbon atoms. A total proportion of R¹, which is a hydrogen atom, an alkali metal atom, or ammonium, (hereinafter, referred to as "percentage of ionization") in 100 mol% of the total R¹ contained in the crosslinked polymer of Aspect 4 is, for example, from 20 to 100 mol%, preferably from 40 to 100 mol%, and more preferably from 50 to 100 mol%. By adjusting the percentage of ionization to the above range, the hydrophilic properties and the water sliding properties become more favorable. An upper limit of the percentage of ionization may be 95 mol% or less, or may be 90 mol% or less.

A content of the structural unit derived from the monomer (AB1) (particularly, the structural unit represented by Formula (1)) in the crosslinked polymer of Aspect 4 above is, for example, from 5 to 99.9 mass%, preferably from 10 to 99 mass%, more preferably from 15 to 95 mass%, and still more preferably from 15 to 90 mass%.

In particular, from the viewpoint of further enhancing the hydrophilic properties or from the viewpoint of further improving the balance between hydrophilicity and water sliding properties, a content of the structural unit derived from the monomer (AB1) (particularly, the structural unit represented by Formula (1)) in the crosslinked polymer of Aspect 4 above is preferably from 45 to 99.9 mass%, more preferably from 65 to 99 mass%, and still more preferably from 75 to 95 mass%.

The structural unit represented by Formula (1) described above may be formed through a polymerization reaction of the hydroxymethylacrylic acid-based monomer represented by Formula (2) described above, but may be formed by any other method. For example, in Formula (2), a monomer in which R¹ is an alkyl group having from 1 to 4 carbon atoms may be polymerized, and then an alkali metal hydroxide or a basic substance such as ammonia or amine may be added to hydrolyze the ester group, thereby forming a structural unit in which R¹ in Formula (1) described above is an alkali metal or ammonium. After the hydrolysis, neutralization may be performed by adding an acid as appropriate to form a structural unit in which R¹ in Formula (1) described above is a hydrogen atom.

The monomer represented by Formula (2) described above may be one type or two or more types. When the crosslinked polymer of Aspect 4 above contains two or more types of structural units represented by Formula (1), the crosslinked polymer may be formed by polymerizing two or more types of monomers represented by Formula (2) described above, or may be formed by polymerizing a monomer represented by Formula (2) described above in which R¹ is an alkyl group having from 1 to 4 carbon atoms, and then partially hydrolyzing the ester group or hydrolyzing the ester group with two or more types of basic substances.

As described above, the crosslinked polymer of Aspect 4 has a structural unit derived from the monomer (C), and preferably has a structural unit derived from a polyfunctional ethylenically unsaturated monomer. The crosslinked polymer of Aspect 4 above may contain a single type of structural unit derived from the monomer (C), or may contain two or more types thereof. The monomer (C) is as described above, and preferred aspects thereof are also the same.

A content of the structural unit derived from the monomer (C) (particularly, a polyfunctional ethylenically unsaturated monomer) in the crosslinked polymer of Aspect 4 above is, for example, from 0.01 to 70 mass%, preferably from 0.01 to 35 mass%, more preferably from 1 to 25 mass%, and still more preferably from 5 to 20 mass%. By adjusting the content of the structural unit derived from the monomer (C) (particularly, the polyfunctional ethylenically unsaturated monomer) to the above range, the hydrophilicity sustaining effect and the water sliding properties tend to be further enhanced.

The content of the structural unit derived from the monomer (C) (particularly, the polyfunctional ethylenically unsaturated monomer) in the crosslinked polymer of Aspect 4 above may be from 0.01 to 10 mass%, from 0.02 to 8 mass%, or from 0.04 to 6 mass%.

In the crosslinked polymer of Aspect 4 above, a content of the structural unit derived from the monomer (C) (particularly, the polyfunctional ethylenically unsaturated monomer) is preferably from 0.1 to 36 parts by mass, more preferably from 2 to 26 parts by mass, and still more preferably from 6 to 21 parts by mass, per 100 parts by mass of the structural unit derived from the monomer (AB1) (particularly, the structural unit represented by Formula (1)).

In the crosslinked polymer of Aspect 4 above, a total content of the structural unit derived from the monomer (AB1) and the structural unit derived from the monomer (C) (particularly, a total content of the structural unit represented by Formula (1) and the structural unit derived from the polyfunctional ethylenically unsaturated monomer) is preferably from 50 to 100 mass%, more preferably from 70 to 100 mass%, and still more preferably from 80 to 100 mass%. An upper limit of the total content may be 99.9 mass% or 99 mass%.

The crosslinked polymer of Aspect 4 above may further contain one type or two or more types of structural units derived from a polyoxyalkylene group-containing ethylenically unsaturated monomer. By incorporating such a structural unit, dispersion stability of the particles in the resin composition is improved, and as a result, further improvement in hydrophilic properties can be expected. In addition, by incorporating such a structural unit, the water sliding properties tend to be further enhanced.

Examples of the polyoxyalkylene group-containing ethylenically unsaturated monomer include compounds having a polyoxyalkylene group in which the number of repetitions of an oxyalkylene unit is 2 or more and an ethylenically unsaturated bond-containing group, and among these, a compound represented by Formula (3) described below is preferable. 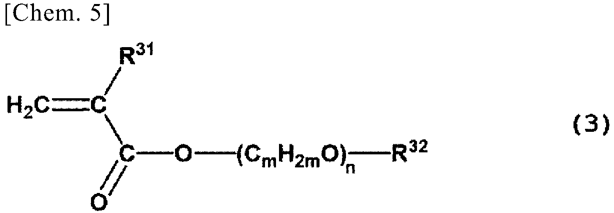 where R³¹ represents a hydrogen atom or a methyl group, R³² represents a hydrogen atom, an alkyl group having from 1 to 4 carbon atoms, or an aromatic hydrocarbon group having from 6 to 20 carbon atoms, m represents an integer of from 1 to 4, and n represents an integer of from 2 to 20.

R³¹ is preferably a methyl group, and R³² is preferably an alkyl group having from 1 to 4 carbon atoms.

The alkyl group having from 1 to 4 carbon atoms represented by R³² is the same as that described as the alkyl group having from 1 to 4 carbon atoms represented by R¹.

Examples of the aromatic hydrocarbon group having from 6 to 20 carbon atoms represented by R³² include a phenyl group that may have one or more alkyl groups having from 1 to 10 carbon atoms (provided that the total number of carbon atoms is 20 or less), and a naphthyl group that may have one or more alkyl groups having from 1 to 10 carbon atoms (provided that the total number of carbon atoms is 20 or less). Examples of the alkyl group having from 1 to 10 carbon atoms include a methyl group, an ethyl group, a propyl group, an isopropyl group, a butyl group, a tert-butyl group, a pentyl group, a hexyl group, a heptyl group, an octyl group, a nonyl group, and a decyl group. Among these, an alkyl group having from 4 to 10 carbon atoms is preferable, and a nonyl group is more preferable.

R³² is preferably a hydrogen atom, an alkyl group having 1 or 2 carbon atoms, or a phenyl group which may have an alkyl group having from 1 to 10 carbon atoms, and more preferably a hydrogen atom, a methyl group, or a phenyl group which may have a nonyl group.

The structure represented by CₘH₂ₘ in Formula (3) refers to an alkylene group, and the alkylene group may be linear or branched, but is preferably linear. The structures represented by a plurality of CₘH₂ₘs in Formula (3) may be the same or different. In a case where the structures represented by a plurality of CₘH₂ₘ are different from each other, -(CₘHₘO)ₙ- in Formula (3) is preferably a structure in which one or a plurality of -C₂H₄O- and one or a plurality of -C₃H₆O- are bonded in any order.

m is preferably an integer of from 2 to 4, more preferably 2 or 3, and still more preferably 2.

n is preferably an integer of from 2 to 15, and more preferably an integer of from 2 to 10.

When the crosslinked polymer of Aspect 4 above includes a structural unit derived from a polyoxyalkylene group-containing ethylenically unsaturated monomer, a content thereof is preferably from 0.1 to 30 mass%, more preferably from 1 to 20 mass%, and still more preferably from 3 to 15 mass%, in the crosslinked polymer of Aspect 4 above.

A content of the structural unit derived from the polyoxyalkylene group-containing ethylenically unsaturated monomer is preferably from 0.2 to 30 parts by mass, more preferably from 2 to 20 parts by mass, and still more preferably from 5 to 16 parts by mass, per 100 parts by mass of the structural unit derived from the monomer (AB1) (particularly, the structural unit represented by Formula (1)).

In the crosslinked polymer of Aspect 4 above, a total content of the structural unit derived from the monomer (AB1), the structural unit derived from the monomer (C), and the structural unit derived from the polyoxyalkylene group-containing ethylenically unsaturated monomer (particularly, a total content of the structural unit represented by Formula (1), the structural unit derived from the polyfunctional ethylenically unsaturated monomer, and the structural unit derived from the polyoxyalkylene group-containing ethylenically unsaturated monomer) is preferably from 60 to 100 mass%, more preferably from 80 to 100 mass%, and still more preferably from 90 to 100 mass%. An upper limit of the total content may be 99.9 mass% or 99 mass%.

The crosslinked polymer of Aspect 4 above may include one or more types of structural units derived from a monomer having, in one molecule, one polymerizable group such as a carbon-carbon double bond-containing group (hereinafter, referred to as "additional monomers"), other than the structural unit derived from the monomer (AB1), the structural unit derived from the monomer (C), and the structural unit derived from the polyoxyalkylene group-containing ethylenically unsaturated monomer.

The additional monomer is not particularly limited, and examples thereof include a (meth)acrylic-based monomer, a styrene-based monomer, a carboxy group-containing monomer, a salt of a carboxy group-containing monomer, a vinyl ester-based monomer, a silane group-containing monomer, a hydroxy group-containing monomer, a nitrogen atom-containing monomer, an oxo group-containing monomer, a fluorine atom-containing monomer, an epoxy group-containing monomer, a photostabilizing monomer, and an ultraviolet-absorbing monomer.

Examples of the (meth)acrylic-based monomer include alkyl (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, 2-ethylhexyl (meth)acrylate, and lauryl (meth)acrylate, and among these, C₁₋₁₀ alkyl (meth)acrylates are preferable, and C₁₋₅ alkyl (meth)acrylates are more preferable.

Examples of the styrene-based monomer include styrene that may have one or more substituents such as a halogen atom (e.g., a fluorine atom, a chlorine atom, a bromine atom, or an iodine atom), and an alkyl group (e.g., a C₁₋₄ alkyl group such as a methyl group, an ethyl group, an n-propyl group, an isopropyl group, an n-butyl group, or a tert-butyl group). Specific examples of the styrene-based monomer include styrene, α-methylstyrene, p-methylstyrene, tert-butylstyrene, chlorostyrene, and vinyltoluene. Among these, styrene is preferable.

Examples of the carboxy group-containing monomer include unsaturated monocarboxylic acids such as (meth)acrylic acid and crotonic acid; unsaturated dicarboxylic acids such as maleic acid, fumaric acid, and itaconic acid; and anhydrides of unsaturated dicarboxylic acids such as maleic anhydride. Among these, unsaturated monocarboxylic acids are preferable, (meth)acrylic acid is more preferable, and acrylic acid is particularly preferable.

Examples of the salt of the carboxy group-containing monomer include an alkali metal salt of the carboxy group-containing monomer, and an ammonium salt of the carboxy group-containing monomer. In the salt of the carboxy group-containing monomer, specific examples of the alkali metal atom and ammonium that form a salt with the carboxy group-containing monomer are the same as the examples of the alkali metal atom and ammonium represented by R¹ described above, and preferred aspects thereof are also the same. Among them, a salt of acrylic acid is preferable.

Examples of the vinyl ester-based monomer include esters of saturated fatty acids such as vinyl acetate and vinyl propionate with vinyl alcohol, and among them, esters of C₁₋₅ saturated fatty acids with vinyl alcohol are preferable.

Examples of the silane group-containing monomer include alkoxysilyl group-containing silane coupling agents such as vinyltrimethoxysilane, vinyltriethoxysilane, vinyltri(methoxyethoxy)silane, γ-(meth)acryloyloxypropyltrimethoxysilane, and 2-styrylethyltrimethoxysilane, silyl halide group-containing silane coupling agents such as vinyltrichlorosilane, and silanol group-containing silane coupling agents such as γ-(meth)acryloyloxypropylhydroxysilane and γ-(meth)acryloyloxypropylmethylhydroxysilane.

Examples of the hydroxy group-containing monomer include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, and 4-hydroxybutyl (meth)acrylate, and among these, C₁₋₈ hydroxyalkyl (meth)acrylates are preferable, and C₁₋₄ hydroxyalkyl (meth)acrylates are more preferable.

Examples of the nitrogen atom-containing monomer include (meth)acrylamide, N,N-dimethyl (meth)acrylamide, dimethylaminoethyl (meth)acrylamide, N-vinylpyrrolidone, and (meth)acrylonitrile.

Examples of the oxo group-containing monomer include ethylene glycol methoxy (meth)acrylate.

Examples of the fluorine atom-containing monomer include fluorinated alkyl (meth)acrylates such as trifluoroethyl (meth)acrylate, tetrafluoropropyl (meth)acrylate, and octafluoropentyl (meth)acrylate, and among these, C₁₋₁₀ fluorinated alkyl (meth)acrylates are preferable, and C₁₋₅ fluorinated alkyl (meth)acrylates are more preferable.

Examples of the epoxy group-containing monomer include epoxy group-containing (meth)acrylates such as glycidyl (meth)acrylate and 2-glycidyloxyethyl (meth)acrylate.

Examples of the photostabilizing monomer include monomers having 2,2,6,6,-tetramethylpiperidine ring structures such as 2,2,6,6,-tetramethylpiperidine-4-(meth)acrylate and 1,2,2,6,6,-pentamethyl-4-piperidyl (meth)acrylate and polymerizable groups (for example, ethylenically unsaturated bond-containing groups such as a (meth)acryloyl group and a vinyl group).

Examples of the ultraviolet-absorbing monomer include benzotriazole-based ultraviolet-absorbing monomers and benzophenone-based ultraviolet-absorbing monomers.

As the additional monomer, a (meth)acrylic-based monomer, a styrene-based monomer, a carboxy group-containing monomer, a salt of a carboxy group-containing monomer, and a hydroxy group-containing monomer are preferable, an alkyl (meth)acrylate, (meth)acrylic acid, a salt of (meth)acrylic acid, and a styrene-based monomer are more preferable, an alkyl acrylate, acrylic acid, and a salt of acrylic acid are still more preferable, and acrylic acid and a salt of acrylic acid are particularly preferable.

In particular, a total content of the structural unit derived from acrylic acid and the structural unit derived from a salt of acrylic acid (in particular, a content of the structural unit derived from a salt of acrylic acid) in the crosslinked polymer of Aspect 4 above may be from 0 to 40 mass% or from 5 to 20 mass%.

A content of the structural unit derived from the additional monomer in the crosslinked polymer of Aspect 4 above is, for example, 40 mass% or less, preferably 30 mass% or less, more preferably 20 mass% or less or 10 mass% or less, and still more preferably 5 mass% or less or 3 mass% or less.

The polymer particles may be entirely composed of the crosslinked polymer, or a part of the polymer particles may be composed of the crosslinked polymer described above. That is, the polymer particles may have a single layer structure or a multilayer structure. When the polymer particle has a single layer structure, the entire particle is preferably composed of the crosslinked polymer described above, and when the polymer particle has a multilayer structure, the outermost shell layer is preferably composed of the crosslinked polymer described above. By adopting such a configuration, desired hydrophilic properties and water sliding properties can be imparted.

The polymer particles having a multilayer structure, preferably a core-shell structure, are effective for further enhancing the hydrophilic properties and the water sliding properties. For example, the outermost shell layer such as the shell part is composed of the crosslinked polymer, whereby high hydrophilicity as a particle can be imparted, or water sliding properties can be imparted to the resulting tangible object, whereas when the hydrophilicity of an inner layer such as a core portion is lowered, low solubility in water and low swellability can be imparted to the particle, and as a result, deterioration of, and elution from, the resulting coating film (tangible object) can be suppressed. Therefore, by adopting a core-shell structure, higher hydrophilicity (particularly, initial hydrophilicity) and water sliding properties can be imparted than in the case of a single layer.

Further, fin materials of heat exchangers used in outdoor units, car air conditioners, and the like are sometimes exposed to contaminants such as carbon black contained in exhaust gas of urban dusts, automobiles, and the like, and adhesion of such contaminants leads to a decrease in hydrophilicity of the coating film (tangible object). When the polymer particles have a multilayer structure such as a core-shell structure, contaminants adhering to the surface of the coating film (tangible object) tend to be more easily removed.

When the polymer particles have a multilayer structure, a second polymer constituting a layer other than the outermost shell layer (for example, the core portion in the case of core-shell particles) is preferably different from the crosslinked polymer.

The second polymer preferably has one or more types of structural units composed of a nonaqueous monomer having no acidic proton-containing group such as a carboxy group, a hydroxy group, a thiol group, or a silanol group, and no amino group. This can reduce the hydrophilicity of the inner layer such as the core portion. The nonaqueous monomer is preferably a monomer composed of a hydrocarbon that may have one or more groups selected from an ester group, an ether group, an amide group, and a halogeno group, and more preferably a monomer composed of a hydrocarbon that may have an ester group.

Specific examples of the nonaqueous monomer may include a (meth)acrylic-based monomer, a styrene-based monomer, a vinyl ester-based monomer, an oxo group-containing monomer, a fluorine atom-containing monomer, and an epoxy group-containing monomer. Examples of the (meth)acrylic-based monomers, styrene-based monomers, vinyl ester-based monomers, oxo group-containing monomers, fluorine atom-containing monomers, and epoxy group-containing monomers include the same monomers as the monomers described for the crosslinked polymer described above, and preferred aspects of each monomer are also the same.

The nonaqueous monomer is preferably a (meth)acrylic-based monomer or a styrene-based monomer, more preferably an alkyl (meth)acrylate or a styrene-based monomer, and still more preferably a C₁₋₅ alkyl (meth)acrylate or styrene.

A content of the structural unit derived from the nonaqueous monomer in the second polymer is preferably from 40 to 99 mass%, more preferably from 50 to 90 mass%, and still more preferably from 60 to 80 mass%.

The second polymer preferably further has one or more types of structural units derived from a polyfunctional ethylenically unsaturated monomer. This can be expected to further enhance the initial hydrophilicity, hydrophilicity sustaining properties, and water sliding properties of the surface of the coating film (tangible object). Examples of the polyfunctional ethylenically unsaturated monomer include the same monomers as the polyfunctional ethylenically unsaturated monomers described for the crosslinked polymer, and among them, a hydrocarbon crosslinkable monomer and a polyvalent (meth)acrylic acid ester are preferable, an aromatic hydrocarbon crosslinkable monomer and a (meth)acrylic acid diester of mono -, di -, or poly-alkylene glycol are more preferable, and divinylbenzene is still more preferable.

A content of the structural unit derived from the polyfunctional ethylenically unsaturated monomer in the second polymer is preferably from 1 to 50 mass%, more preferably from 10 to 45 mass%, and still more preferably from 20 to 40 mass%.

In the second polymer, a content of the structural unit derived from the polyfunctional ethylenically unsaturated monomer is preferably from 10 to 70 parts by mass, more preferably from 20 to 60 parts by mass, and still more preferably from 20 to 50 parts by mass, per 100 parts by mass of the structural unit derived from the nonaqueous monomer.

In addition, a total content of the structural unit derived from the nonaqueous monomer and the structural unit derived from the polyfunctional ethylenically unsaturated monomer in the second polymer is preferably from 60 to 100 mass%, more preferably from 80 to 100 mass%, and still more preferably from 90 to 100 mass%. An upper limit of the total content may be 99.9 mass% or 99 mass%.

The second polymer may include one or more types of structural units derived from the monomer (AB1) (particularly, the structural unit represented by Formula (1)), but preferably does not contain the structural unit. A content (content proportion) of the structural unit derived from the monomer (AB1) (particularly, the structural unit represented by Formula (1)) in the second polymer is preferably lower than the content (content proportion) of the structural unit derived from the monomer (AB1) (particularly, the structural unit represented by Formula (1)) in the crosslinked polymer, and, specifically, is preferably 10 mass% or less, and more preferably 5 mass% or less.

The second polymer may include one or more types of structural units derived from a monomer having, in one molecule, one polymerizable group such as a carbon-carbon double bond-containing group (hereinafter, referred to as "second additional monomer") other than the structural unit derived from the nonaqueous monomer, the structural unit derived from the polyfunctional ethylenically unsaturated monomer, and the structural unit derived from the monomer (AB1).

Examples of the second additional monomer include monomers having a carboxy group, a thiol group, a silanol group, an amino group, or the like, and examples thereof include a carboxy group-containing monomer, a silane group-containing monomer, a hydroxy group-containing monomer, a nitrogen atom-containing monomer, a photostabilizing monomer, and an ultraviolet-absorbing monomer. Examples of the carboxy group-containing monomer, the silane group-containing monomer, the hydroxy group-containing monomer, the nitrogen atom-containing monomer, the photostabilizing monomer, and the ultraviolet-absorbing monomer are the same as those of the monomers described for the crosslinked polymer, and preferred aspects of each monomer are also the same.

A content of the structural unit derived from the second additional monomer in the second polymer is preferably 30 mass% or less, more preferably 10 mass% or less, and still more preferably 5 mass% or less or 3 mass% or less.

A volume average particle size of the polymer particles is, for example, from 10 nm to 10 µm, preferably from 10 nm to 5 µm, more preferably from 20 nm to 1 µm, and still more preferably from 30 nm to 500 nm. From the viewpoint of further enhancing the hydrophilicity after oil stain adhesion, the volume average particle size is preferably 10 nm to 500 nm, more preferably 15 nm to 300 nm, and still more preferably 20 nm to 100 nm. The volume average particle size can be measured by, for example, a dynamic light scattering method.

### Method for Producing Polymer Particle

The method for producing the polymer particles is not particularly limited, and a typically known method may be adopted, but it is preferable to produce the polymer particles by polymerizing monomers constituting the polymer particles (hereinafter, sometimes collectively referred to as "raw material monomer components") in an aqueous solvent, and optionally, partially or completely hydrolyzing the monomers. For example, in the case of producing polymer particles containing the crosslinked polymer of Aspect 4, it is preferable to produce the polymer particles by polymerizing, in an aqueous solvent, a hydroxymethyl acrylic acid-based monomer represented by Formula (2), which is a raw material monomer component, in which R¹ is an alkyl group having from 1 to 4 carbon atoms (hereinafter, referred to as hydroxymethyl acrylate), a polyfunctional ethylenically unsaturated monomer, a polyoxyalkylene group-containing ethylenically unsaturated monomer used as necessary, an additional monomer, a nonaqueous monomer, and a second additional monomer, and partially or completely hydrolyzing them as necessary. The use of the hydroxymethyl acrylate is preferred from the viewpoint of reducing the environmental load, because the product can be formed into particles even when the polymerization is performed in an aqueous solvent that does not essentially require an organic solvent.

Examples of the polymerization method include suspension polymerization, emulsion polymerization, and dispersion polymerization. Among them, emulsion polymerization is preferable in which the raw material monomer components are dispersed in an aqueous solvent in the presence of an emulsifier to perform a (radical) polymerization reaction. The emulsion polymerization may be performed in only one stage or in multiple stages. For example, core-shell structured polymer particles can be produced by polymerizing a nonaqueous monomer, and a polyfunctional ethylenically unsaturated monomer, a monomer (AB) (particularly, a monomer represented by Formula (2)), and a second additional monomer used as necessary in an aqueous solvent in a first stage to synthesize a seed particle to be a core (that is, the second polymer), and then polymerizing monomers constituting the crosslinked polymer (preferably, a hydroxymethyl acrylate, a polyfunctional ethylenically unsaturated monomer, and a polyoxyalkylene group-containing ethylenically unsaturated monomer and an additional monomer used as necessary) in a second stage to synthesize a shell (that is, the crosslinked polymer).

As the emulsifier, one or more types may be used, and the emulsifier may be a non-reactive surfactant having no polymerizable group capable of radical polymerization in the molecule, or may be a reactive surfactant having a polymerizable group capable of radical polymerization (for example, an ethylenically unsaturated group) in the molecule.

The non-reactive surfactant includes anionic and nonionic surfactants. Examples of the non-reactive anionic surfactant include fatty acid salts, alkyl (aryl) sulfonates, alkyl sulfate ester salts, and polyoxyethylene alkyl (phenyl) ether sulfates, and examples of the non-reactive nonionic surfactant include polyoxyethylene alkyl (phenyl) ethers, polyoxyethylene sorbitan fatty acid esters, polyoxyethylene fatty acid esters, and polyoxyethylene polyoxypropylene block polymers.

The reactive surfactant includes anionic and nonionic surfactants. Examples of the anionic reactive surfactant include, but are not limited to, an ether sulfate-based reactive surfactant and a phosphoric acid ester-based reactive surfactant.

That is, an amount of the emulsifier to be used is preferably from 0.05 to 20 parts by mass, more preferably from 0.1 to 10 parts by mass, still more preferably from 0.2 to 5 parts by mass, and particularly preferably from 0.3 to 3 parts by mass, per 100 parts by mass of the raw material monomer components.

Examples of the aqueous solvent include water alone and a mixed solvent of water and a water-miscible organic solvent. The aqueous solvent typically refers to a solvent having a water content of more than 50 vol%. As the water, ion-exchanged water (deionized water), distilled water, pure water, or the like can be used. As the water-miscible organic solvent, an organic solvent that can be uniformly mixed with water (e.g., a lower alcohol such as a C₁₋₄ alkyl alcohol) can be used. From the viewpoint of minimizing the amount of the water-miscible organic solvent remaining in the polymer particles, an aqueous solvent in which 80 vol% or more of the aqueous solvent is water is preferable, an aqueous solvent in which 90 vol% or more of the aqueous solvent is water is more preferable, an aqueous solvent in which 95 vol% or more of the aqueous solvent is water is still more preferable, an aqueous solvent substantially consisting of water (an aqueous solvent in which 99.5 vol% or more of the aqueous solvent is water) is particularly preferable, and water alone is most preferable.

In polymerizing the raw material monomer components, for example, a polymerization initiator, or a means such as irradiation with ultraviolet rays or radiation, or application of heat is used, and it is preferable to use a polymerization initiator, and from the viewpoint of efficiently reacting the raw material monomer components and sufficiently reducing the remaining monomer, a polymerization initiator (redox type polymerization initiator) obtained by combining an oxidizing agent and a reducing agent is preferable. Examples of the oxidizing agent include persulfates such as ammonium persulfate and potassium persulfate, and peroxide-based polymerization initiators such as hydrogen peroxide, benzoyl peroxide, para-chlorobenzoyl peroxide, lauroyl peroxide, and ammonium peroxide. Examples of the reducing agent include soluble sulfites and ascorbic acid.

As necessary, an additive such as a chain transfer agent, a pH buffer or a chelating agent may be added in an appropriate amount in the reaction system of the emulsion polymerization. An amount of the additive varies depending on the type thereof and thus cannot be determined unconditionally, but is usually preferably from 0.01 to 5 parts by mass, and more preferably from 0.1 to 3 parts by mass, per 100 parts by mass of the raw material monomer components.

The hydrolysis of the polymer particles can be performed by adding, for example, an aqueous solution of an alkali metal hydroxide such as an aqueous sodium hydroxide solution, an aqueous solution of an amine such as an aqueous cyclohexylamine solution, or an aqueous solution containing a basic substance such as an aqueous ammonia solution. Further, partial neutralization or complete neutralization can be performed by adding an acid to the solution after the hydrolysis as appropriate. By performing hydrolysis and neutralization, a group corresponding to R in the -COOR group contained in the polymer particle (particularly, a group corresponding to R¹ in Formula (1)) can be converted to a hydrogen atom, an alkali metal atom, or ammonium. By adjusting an amount of an acid or base to be used during polymerization, hydrolysis, and neutralization, or adjusting a proportion of a monomer unit in which R (particularly, R¹) is a hydrogen atom, the pH or hydrophilicity of the polymer can be adjusted, and the hydrophilicity sustaining properties and water sliding properties of a tangible object such as a hydrophilic coating film tend to be further enhanced.

The percentage of hydrolysis of the polymer particles in the present disclosure is, for example, from 20 to 100%, preferably from 40 to 100%, and more preferably from 50 to 100% from the viewpoint of further enhancing the hydrophilic properties and the water sliding properties. In addition, the percentage of hydrolysis may be 95% or less, or 90% or less. The percentage of hydrolysis can be calculated from an amount of the basic substance added (substance amount) per 100 mol% of a structural unit derived from a hydrolyzable monomer contained in the crosslinked polymer. Examples of the hydrolyzable monomer include acrylic-based monomers such as alkyl acrylates, and monomers represented by General Formula (2). When the percentage of hydrolysis is calculated back from the polymer, the percentage of hydrolysis can be calculated on the assumption that all of the carboxylic acid groups in the hydrolyzable monomers such as the acrylic-based monomer and the monomer represented by Formula (2) are present as esters.

The agent for imparting a hydrophilicity sustaining effect and/or water sliding properties of the present invention essentially contains the polymer particles. A content of the polymer particles in the agent for imparting a hydrophilicity sustaining effect and/or water sliding properties of the present invention is, for example, 0.01 mass% or more, preferably 10 mass% or more, more preferably 30 mass% or more, still more preferably 50 mass% or more, yet still more preferably 90 mass% or more, and particularly preferably 98 mass% or more, and may be 100 mass% or 99.8 mass% or less.

The agent for imparting a hydrophilicity sustaining effect and/or water sliding properties of the present invention may contain components other than the polymer particles. The components other than the polymer particles are not particularly limited, and examples thereof include solvents such as aqueous solvents.

By using the polymer particles, it is possible to impart hydrophilicity sustaining properties to a tangible object typified by the coating film, that is, it is possible to sustainably hydrophilize the resulting tangible object. In addition, by using the polymer particles described above, hydrophilicity and water sliding properties can be imparted to a tangible object represented by the coating film, that is, not only hydrophilization but also water sliding can be applied to the resulting tangible object. For example, by forming a tangible object having hydrophilicity sustaining properties on the surface of a fin material in a heat exchanger, it is possible to suppress bridging between fins by condensed water for a long period of time. In addition, since a tangible object having hydrophilicity and water sliding properties is formed on the surface of the fin material in the heat exchanger, it is possible to suppress bridging between the fins as compared with the case of adopting the technique of enhancing the water sliding properties by imparting water repellency to the surface of the fin material.

The tangible object is preferably produced from a composition containing the polymer particles described above (i.e., a composition containing the agent for imparting a hydrophilicity sustaining effect and/or water sliding properties). Hereinafter, the composition and the tangible object will be described in order.

### 2. Composition

The composition of the present invention contains the above-described polymer particles, that is, the above-described agent for imparting a hydrophilicity sustaining effect and/or water sliding properties. A content of solids of the agent for imparting a hydrophilicity sustaining effect and/or water sliding properties (preferably the polymer particles) in the composition is not particularly limited, and is, for example, from 1 to 80 mass%, preferably from 5 to 50 mass%, and more preferably from 8 to 30 mass%, in 100 mass% of the solids of the composition.

The composition preferably further has a resin different from the polymer particles. Hereinafter, a composition containing an agent for imparting a hydrophilicity sustaining effect and/or water sliding properties and a resin is sometimes referred to as resin composition. In the present invention, the resin composition and the tangible object include various ones as described later, but here, a case where a hydrophilic coating film is formed using a resin composition containing an agent for imparting a hydrophilicity sustaining effect and/or water sliding properties and a hydrophilic resin will be described.

The hydrophilic resin is not particularly limited, but is preferably a resin having a polar functional group such as a carboxy group, a salt of a carboxy group, a hydroxy group, a sulfonic acid group, an amide group, or an amino group in a side chain, or a resin having a polyether skeleton and/or a polyamine skeleton in a main chain, and more preferably a resin having a polar functional group in a side chain.

The resin having a polar functional group in a side chain may have a single type of the polar functional group, or may have two or more types thereof. In the present specification, the "salt of a carboxy group" refers to a functional group in which a hydrogen ion contained in a carboxy group (-COOH) is substituted with a monovalent cation, and is preferably -COOR^{a} (R^{a} represents an alkali metal atom or ammonium). The alkali metal atom and ammonium represented by R^{a} are the same as the alkali metal atom and ammonium represented by R¹ in Formula (1) described above. Among them, R^{a} is preferably an alkali metal atom or hydroxyalkylammonium, more preferably an alkali metal atom or mono -, di-or tri-(hydroxy-C₁₋₁₀ alkyl)ammonium, and still more preferably sodium or mono-(hydroxy-C₁₋₅ alkyl)ammonium.

The polar functional group is preferably a carboxy group or a salt of a carboxy group, more preferably a carboxy group or an alkali metal salt of a carboxy group, and still more preferably a carboxy group or a sodium salt of a carboxy group.

Specific examples of the hydrophilic resin include carboxy group-containing polymers such as (co)polymers of (meth)acrylic acid and (co)polymers of maleic acid; carboxy group salt-containing polymers such as (co)polymers of (meth)acrylic acid salts and (co)polymers of maleic acid salts; hydroxy group-containing polymers such as (co)polymers of hydroxy (meth)acrylate and (co)polymers of polyvinyl alcohol; sulfonic acid group-containing polymers such as (co)polymers of 2-acrylamide-2-methylpropanesulfonic acid; amide group-containing polymers such as (co)polymers of acrylamide and (co)polymers of N-vinyl-2-pyrrolidone; amino group-containing polymers such as (co)polymers of diethylaminoethyl (meth)acrylate; polyether-based (co)polymers such as polyethylene glycol; and polyamine-based (co)polymers such as polyethyleneimine. The (co)polymer may be either a polymer or a copolymer. The hydrophilic resin may be a thermoplastic resin or a thermosetting resin, but is preferably a thermosetting resin. Since thermosetting resins have excellent mechanical strength and heat resistance, the use of a thermosetting resin as the hydrophilic resin tends to allow the surface of the resulting tangible object to maintain its irregular shape and to further enhance the effect of improving the hydrophilic properties and the water sliding properties. A single type of the hydrophilic resin may be used, or two or more types thereof may be used in combination.

In particular, from the viewpoint of further enhancing the effect of the agent on imparting a hydrophilicity sustaining effect and/or water sliding properties (the effect of improving the hydrophilic properties and water sliding properties of the resulting tangible object), the hydrophilic resin is more preferably a resin having at least one polar functional group selected from the group consisting of a carboxy group and a salt of a carboxy group in a side chain, and still more preferably a (co)polymer of (meth)acrylic acid (salt). The (meth)acrylic acid (salt) refers to (meth)acrylic acid and/or a salt of (meth)acrylic acid, and the copolymer of (meth)acrylic acid (salt) refers to a copolymer of (meth)acrylic acid (salt) and another copolymerizable monomer. Examples of the other copolymerizable monomer include monomers other than (meth)acrylic acid and polyfunctional ethylenically unsaturated monomers among the additional monomers constituting the polymer particles. Among these, (meth)acrylic-based monomers, styrene-based monomers, and hydroxy group-containing monomers are preferable, and alkyl (meth)acrylates and styrene-based monomers are more preferable. A single type of the other copolymerizable monomer may be used, or two or more types thereof may be used in combination.

In the (co)polymer of (meth)acrylic acid (salt), a total proportion of the structural units derived from (meth)acrylic acid and a salt of (meth)acrylic acid (particularly, a proportion of the structural unit derived from a salt of (meth)acrylic acid) is, for example, 30 mass% or more, preferably 50 mass% or more, more preferably 70 mass% or more, and still more preferably 90 mass% or more, and may be 100 mass%.

A content of the solids of the agent for imparting a hydrophilicity sustaining effect and/or water sliding properties (preferably the polymer particles) in the resin composition is not particularly limited, but is preferably 0.1 parts by mass or more, more preferably 5 parts by mass or more, and still more preferably 15 parts by mass or more, per 100 parts by mass of the hydrophilic resin. When the content is within the above range, the hydrophilicity sustaining effect and/or water sliding properties of the hydrophilic coating film tend(s) to be further improved. In particular, from the viewpoint of further enhancing the water sliding properties of the hydrophilic coating film, a content of the solids (preferably the polymer particles) of the agent for imparting a hydrophilicity sustaining effect and/or water sliding properties is preferably 40 parts by mass or more, more preferably 60 parts by mass or more, and still more preferably 80 parts by mass or more, per 100 parts by mass of the hydrophilic resin.

An upper limit of the content is not particularly limited, but is preferably 200 parts by mass or less, and more preferably 150 parts by mass or less, per 100 parts by mass of the hydrophilic resin.

That is, the content is preferably from 0.1 to 200 parts by mass, more preferably from 5 to 200 parts by mass, still more preferably from 15 to 200 parts by mass, yet still more preferably from 40 to 200 parts by mass, particularly preferably from 60 to 200 parts by mass, and most preferably from 80 to 150 parts by mass, per 100 parts by mass of the hydrophilic resin.

A weight average molecular weight of the hydrophilic resin is not particularly limited, and is, for example, from 1000 to 100000, preferably from 1500 to 500000, and more preferably from 2000 to 200000.

The composition (preferably the resin composition) preferably further contains a crosslinking agent. Strength of the hydrophilic coating film can be enhanced by incorporating the crosslinking agent. In addition, the durability of the hydrophilic coating film is enhanced by incorporating the crosslinking agent, and as a result, the hydrophilicity sustaining effect and the water sliding properties of the hydrophilic coating film after a heat cycle as shown in Examples described later are enhanced. A single type of the crosslinking agent may be used, or two or more types thereof may be used in combination. The crosslinking agent is preferably a compound having two or more groups capable of reacting with the polar functional group of the hydrophilic resin in one molecule. Examples of the group capable of reacting with the polar functional group include an epoxy group, an oxazoline group, a carbodiimide group, and an isocyanate group, and the group may be appropriately selected depending on the hydrophilic resin to be used. For example, in a case where a resin having at least one polar functional group selected from the group consisting of a carboxy group and a salt of a carboxy group in a side chain (preferably, a (co)polymer of (meth)acrylic acid (salt)) is used as the hydrophilic resin, it is preferable to use a crosslinking agent having two or more oxazoline groups in one molecule (hereinafter, sometimes referred to as oxazoline-based crosslinking agent), and by adopting this combination, the above-described durability improvement effect tends to be further enhanced.

As the crosslinking agent having two or more oxazoline groups in one molecule, a water-soluble oxazoline compound is preferable, and an oxazoline group-containing polymer is preferable, from the viewpoint of excellent crosslinking performance. The oxazoline group-containing polymer can be produced by a known production method. Examples of the production method include a method of polymerizing one type or two or more types of addition-polymerizable oxazolines or monomer components containing an addition-polymerizable oxazoline, and a monomer copolymerizable with the addition-polymerizable oxazoline.

Examples of the addition-polymerizable oxazoline include a compound having a polymerizable unsaturated group and an oxazoline group in the molecule, such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

The monomer copolymerizable with the addition-polymerizable oxazoline is preferably a monomer that is copolymerizable with an addition-polymerizable oxazoline without having a functional group that reacts with an oxazoline group. Examples thereof include a (meth)acrylic-based monomer such as an alkyl (meth)acrylate; a styrene-based monomer such as styrene, α-methylstyrene, and chloromethylstyrene; a vinyl-based monomer such as vinyl acetate, vinyl chloride, and vinyl benzoate; acrylonitrile; a (meth)acrylamide-based monomer such as acrylamide; and an olefin-based monomer such as ethylene and propylene.

Among the oxazoline group-containing polymers, a water-soluble oxazoline group-containing polymer is preferable, and can be produced by the same method as the method for producing the oxazoline group-containing polymer. Examples of the water-soluble oxazoline group-containing polymer include a polymer that has a (meth)acrylic-based resin as a main chain and contain an oxazoline group in a side chain.

The oxazoline group-containing polymer to be used may be a commercially available product. Examples of the commercially available product include a water-soluble polymer available from Nippon Shokubai Co., Ltd. with a trade name of EPOCROS WS-500 or EPOCROS WS-700, and an emulsion-type polymer available from Nippon Shokubai Co., Ltd. with a trade name of EPOCROS K-2010E, EPOCROS K-2020E, or EPOCROS K-2035E.

A content of the crosslinking agent is not particularly limited, but is preferably from 0.1 to 50 parts by mass, more preferably from 1 to 40 parts by mass, and still more preferably from 5 to 30 parts by mass, per 100 parts by mass of the hydrophilic resin.

A total content of the solids of the agent for imparting a hydrophilicity sustaining effect and/or water sliding properties (preferably the polymer particles), the hydrophilic resin, and the crosslinking agent in 100 mass% of the solids of the composition (preferably the resin composition) is, for example, 80 mass% or more, preferably 90 mass% or more, and more preferably 97 mass% or more, and may be 100 mass%.

The composition (preferably the resin composition) may further contain a solvent. By incorporating the solvent, coatability of the composition (preferably the resin composition) becomes good. The solvent is preferably an aqueous solvent from the viewpoint of reducing the environmental load. The aqueous solvent is the same as the aqueous solvent used in the emulsion polymerization, and preferred aspects thereof are also the same.

A content of the solvent in the composition (preferably the resin composition) may be 0 mass%, and is preferably 0.1 mass% or more, more preferably 40 mass% or more, still more preferably 60 mass% or more, and particularly preferably 80 mass% or more, and is preferably 99.9 mass% or less, and more preferably 99 mass% or less. That is, the content of the solvent in the composition (preferably the resin composition) may be from 0 to 99.9 mass%, preferably from 0.1 to 99.9 mass%, more preferably from 40 to 99.9 mass%, still more preferably from 60 to 99.9 mass%, and particularly preferably from 80 to 99 mass%.

The composition (preferably resin composition) may contain an additional additive as long as the effects of the present invention are not impaired. As the additional additive, an additive usually used in the art can be used, and examples thereof include compounds having a hydroxy group, such as water-soluble low molecular weight compounds having a hydroxy group, such as L-ascorbic acid, gallic acid, tannic acid, glucono-δ-lactone, or gluconic acid, and high molecular weight compounds having a hydroxy group, such as polyvinyl alcohol.

A molecular weight of the water-soluble low molecular weight compound having a hydroxy group is not particularly limited, but is, for example, from 50 to 2000, and preferably 100 to 2000.

A weight average molecular weight of the high molecular weight compound having a hydroxy group is not particularly limited, and is, for example, from 3000 to 100000.

The compound having a hydroxy group is preferably a compound (A) satisfying Requirements 1 to 4 below. The composition (preferably the resin composition) contains the compound (A), and thus the hydrophilicity sustaining properties of the resulting tangible object are likely to be more excellent. The effect of the compound (A) on improving the hydrophilicity sustaining properties is more easily exhibited in a case where the composition contains the crosslinking agent described above, that is, the compound (A) is preferably used in combination with the crosslinking agent. In particular, when the compound (A) and the oxazoline-based crosslinking agent are used in combination, the effect of improving the hydrophilic properties tends to be higher.

Requirement 1: Being water-soluble.
Requirement 2: Having an acid dissociation constant pKa_{A} (temperature: room temperature (25°C), solvent: water) of 12 or less.
Requirement 3: Having at least one hydroxy group, and a total number of hydroxy groups and carboxy groups contained in one molecule of 2 or more.
Requirement 4: Having at least one high acidity group selected from a hydroxy group and a carboxy group having an acid dissociation constant pKa (temperature: room temperature (25°C), solvent: water) of 12 or less.

As described in Requirement 1, the compound (A) is a water-soluble compound. In the present specification, the term "water-soluble" means that a water solubility at 20°C (hereinafter, water solubility (20°C)) is 20 g/L or more, that is, it can be said that the water solubility (20°C) of the compound (A) is 20 g/L or more. In the present specification, in a constant temperature and humidity chamber at a temperature of 20°C, X g of a compound (temperature: 20°C) is added to 50 cc of ion-exchanged water (temperature: 20°C) in a 100-cc screw tube, and the mixture is stirred for 5 minutes using a magnetic stirrer (rotator: 10 mm × φ 4 mm), and then allowed to stand for 10 minutes, and the resulting solution is visually confirmed. It is determined that the water solubility (20°C) of the compound is Y g/L or more (Y = 20X) when the obtained solution is uniformly transparent, and that the water solubility (20°C) of the compound is less than Y g/L (Y = 20X) when the obtained solution is not uniformly transparent. That is, the compound (A) in the present invention can be said to be a compound that gives a uniformly transparent solution when 1 g of the compound is used in the measurement of the water solubility (20°C). The term "uniformly transparent" means that no phase separation is visually observed and that no white turbidity is observed.

The acid dissociation constant pKa_{A} in Requirement 2 refers to a value as measured at room temperature (25°C) using water as a solvent. For a compound that undergoes multiple ionization, the acid dissociation constant pKa₁ in the first stage is defined as acid dissociation constant pKa_{A}. The pKa_{A} of the compound (A) is preferably 11 or less, more preferably 10 or less, and still more preferably 5 or less.

As described in Requirement 3, the compound (A) is a compound having at least one hydroxy group, and the total number of hydroxy groups and carboxy groups contained in one molecule of the compound (A) is two or more. That is, the compound (A) can be said to be a compound having two or more hydroxy groups or a compound having at least one hydroxy group and at least one carboxy group.

The total number of hydroxy groups and carboxy groups in one molecule of the compound (A) is, for example, from 2 to 30, preferably from 2 to 6, and more preferably from 3 to 6.

As described in Requirement 4, the compound (A) has at least one high acidity group selected from a hydroxy group having a pKa of 12 or less (hereinafter, sometimes referred to as hydroxy group (1)) and a carboxy group. At least one of the hydroxy group and the carboxy group of the compound (A) is the high acidity group, and thus the compound (A) can react with the crosslinking agent (preferably an oxazoline-based crosslinking agent), and the effect of the compound (A) on improving the hydrophilicity sustaining properties is easily achieved.

The pKa of the high acidity group is preferably 11 or less, more preferably 10 or less, and still more preferably 5 or less.

The number of the high acidity groups contained in one molecule of the compound (A) is preferably from 1 to 3, and more preferably 1.

The compound (A) preferably satisfies Requirement 5 below in addition to Requirements 1 to 4 above.

Requirement 5: Having at least one hydroxy group having an acid dissociation constant pKa (temperature: room temperature (25°C), solvent: water) of more than 12.

When the compound (A) contains a hydroxy group (hereinafter, sometimes referred to as hydroxy group (2)) having a pKa of more than 12, the initial hydrophilicity and hydrophilicity sustaining properties of the resulting tangible object are further enhanced.

The pKa of the hydroxy group (2) is more preferably 14 or more, and still more preferably 15 or more. An upper limit of the pKa of the hydroxy group (2) is not particularly limited, but is preferably 20 or less.

The number of the hydroxy groups (2) contained in one molecule of the compound (A) is preferably from 1 to 20, and more preferably from 3 to 5.

As the compound (A), L-ascorbic acid, gallic acid, tannic acid, and gluconic acid are preferable, L-ascorbic acid, gallic acid, and gluconic acid are more preferable, and L-ascorbic acid is particularly preferable.

In addition, when the compound (A) is contained in the composition, the compound (A) may be added as it is, or the compound (A) may be contained in the composition by adding a compound (B) which is modified into the compound (A) in the composition. Examples of the compound (B) include a compound that is modified to the compound (A) by reacting with water at room temperature (25°C) and being hydrolyzed, and specific examples thereof include glucono-δ-lactone.

A content of the compound having a hydroxy group (preferably the compound (A)) is not particularly limited, but is, for example, from 0 to 100 parts by mass, preferably from 0.1 to 100 parts by mass, more preferably from 1 to 50 parts by mass, and still more preferably from 5 to 30 parts by mass, per 100 parts by mass of the hydrophilic resin.

Amounts of the compound (A) and the compound (B) added are not particularly limited, and are, for example, from 0 to 100 parts by mass, preferably from 0.1 to 100 parts by mass, more preferably from 1 to 50 parts by mass, and still more preferably from 5 to 30 parts by mass, per 100 parts by mass of the hydrophilic resin.

A total content of the solids of the agent for imparting a hydrophilicity sustaining effect and/or water sliding properties (preferably the polymer particles), the hydrophilic resin, the crosslinking agent (preferably the oxazoline-based crosslinking agent), and the compound having a hydroxy group (preferably the compound (A)) in 100 mass% of the solids of the composition (preferably the resin composition) is, for example, 80 mass% or more, preferably 90 mass% or more, and more preferably 97 mass% or more, and may be 100 mass%. That is, it is particularly preferable to adjust the total content of the polymer particles, the hydrophilic resin, the oxazoline-based crosslinking agent, and the compound (A) to the above range in 100 mass% of the solids of the resin composition.

The method for producing the composition of the present invention is not particularly limited, but may include, for example, a step of mixing an agent for imparting a hydrophilicity sustaining effect and/or water sliding properties, and a hydrophilic resin, a crosslinking agent, a solvent, and an additional additive used as necessary (also referred to as Mixing Step (A)). In Mixing Step (A), the components may be mixed, for example, in the presence of a solvent (preferably an aqueous solvent) or without a solvent. The crosslinking agent may be added after film formation described below.

### 3. Hydrophilic Coating Film as Tangible Object

The hydrophilic coating film as a tangible object formed from the composition (preferably a resin composition) contains the above-described agent for imparting a hydrophilicity sustaining effect and/or water sliding properties (particularly, the above-described polymer particles), and therefore has not only good hydrophilicity but also a hydrophilicity sustaining effect and/or good water sliding properties. Preferably, the hydrophilicity of the coating film (tangible object) after oil stain adhesion is also improved. Therefore, the agent for imparting a hydrophilicity sustaining effect and/or water sliding properties of the present invention is suitably used for a tangible object required to have hydrophilicity and hydrophilicity sustaining properties and/or water sliding properties, and particularly suitably used for a hydrophilic coating film to be applied to a fin material of a heat exchanger.

When the tangible object such as a coating film exhibits the hydrophilicity sustaining effect, the tangible object preferably satisfies the following (a) and (b), for example:
(a) having an initial contact angle (θ0) of less than 40° as measured by a method described in Evaluation of Initial Hydrophilicity in Examples described later; and
(b) having a contact angle (θ2) after a wet/dry cycle of less than 40° as measured by a method described in Evaluation 2 of Hydrophilicity Sustaining Effect after Wet/Dry Cycle in Examples described later.

The initial contact angle (θ0) of the tangible object is preferably less than 35°, more preferably 30° or less, still more preferably 20° or less, and particularly preferably 15° or less or less than 15°. A lower limit of the initial contact angle (θ0) is not particularly limited, but is, for example, 5° or more.

The contact angle (θ2) of the tangible object is preferably less than 35°, more preferably 30° or less, still more preferably 26° or less, yet still more preferably 20° or less, and particularly preferably 15° or less or less than 15°. A lower limit of the contact angle (θ2) is not particularly limited, but is, for example, 2° or more or 8° or more.

In a more preferred aspect, the relationship between the initial contact angle (θ0) and the contact angle (θ2) of the tangible object satisfies the following (c) or (d):
(c) contact angle (θ2) ≤ initial contact angle (θ0); or
(d) contact angle (θ2) > initial contact angle (θ0), in which an absolute value of a difference between the contact angle (θ2) and the initial contact angle (θ0) is 20° or less.

When the relationship between the initial contact angle (θ0) and the contact angle (θ2) of the tangible object satisfies the above (c), the absolute value of the difference between the contact angle (θ2) and the initial contact angle (θ0) is preferably any value, but is more preferably 1° or more, and still more preferably 3° or more. An upper limit of the absolute value of the difference is not particularly limited, but is, for example, 15° or less.

When the relationship between the initial contact angle (θ0) and the contact angle (θ2) of the tangible object satisfies the above (d), the absolute value of the difference between the contact angle (θ2) and the initial contact angle (θ0) is preferably as small as possible, and specifically, the absolute value is 20° or less, preferably 15° or less, and more preferably 10° or less.

The contact angle (θ1) after the wet/dry cycle as measured by the method described in Evaluation 1 of Hydrophilicity Sustaining Effect after Wet/Dry Cycle in Examples described later is, for example, less than 40°, preferably less than 35°, more preferably 30° or less, still more preferably 26° or less, yet still more preferably 20° or less, and particularly preferably 15° or less or less than 15°. A lower limit of the contact angle (θ1) is not particularly limited, but is, for example, 2° or more or 8° or more. Since Evaluation 1 of the hydrophilicity sustaining effect after the wet/dry cycle is performed under a stricter condition than Evaluation 2 of the hydrophilicity sustaining effect after the wet/dry cycle, the contact angle (θ1) tends to be larger than the contact angle (θ2).

In a more preferred aspect, the relationship between the initial contact angle (θ0) and the contact angle (θ1) of the tangible object satisfies the following (e) or (f):
(e) contact angle (θ1) ≤ initial contact angle (θ0); or
(f) contact angle (θ1) > initial contact angle (θ0), in which an absolute value of a difference between the contact angle (θ1) and the initial contact angle (θ0) is 20° or less.

When the relationship between the initial contact angle (θ0) and the contact angle (θ1) of the tangible object satisfies the above (e), the absolute value of the difference between the contact angle (θ1) and the initial contact angle (θ0) is preferably any value, but is more preferably 1° or more, and still more preferably 3° or more. An upper limit of the absolute value of the difference is not particularly limited, but is, for example, 15° or less.

When the relationship between the initial contact angle (θ0) and the contact angle (θ1) of the tangible object satisfies the above (f), the absolute value of the difference between the contact angle (θ1) and the initial contact angle (θ0) is preferably as small as possible, and specifically, the absolute value is 20° or less, preferably 15° or less, and more preferably 10° or less.

A contact angle (θ3) after oil stain adhesion, as measured by a method described in Evaluation of Hydrophilicity after Oil Stain Adhesion in Examples described later, is preferably less than 35°, more preferably 30° or less, still more preferably 26° or less, and particularly preferably 15° or less or less than 15°. A lower limit of the contact angle (θ3) is not particularly limited, but is, for example, 3° or more.

In a more preferred aspect, the relationship between the initial contact angle (θ0) and the contact angle (θ3) of the tangible object satisfies the following (g) or (h):
(g) contact angle (θ3) ≤ initial contact angle (θ0); or
(h) contact angle (θ3) > initial contact angle (θ0), in which an absolute value of a difference between the contact angle (θ3) and the initial contact angle (θ0) is 20° or less.

When the relationship between the initial contact angle (θ0) and the contact angle (θ3) of the tangible object satisfies the above (g), the absolute value of the difference between the contact angle (θ3) and the initial contact angle (θ0) is preferably any value, but is more preferably 0.1° or more. An upper limit of the absolute value of the difference is not particularly limited, but is, for example, 15° or less.

When the relationship between the initial contact angle (θ0) and the contact angle (θ3) of the tangible object satisfies the above (h), the absolute value of the difference between the contact angle (θ3) and the initial contact angle (θ0) of the tangible object is preferably as small as possible, and specifically, the absolute value is 20° or less, preferably 15° or less, and more preferably 10° or less.

When the tangible object such as a coating film exhibits hydrophilicity and water sliding properties, for example, the tangible object preferably satisfies the initial contact angle (θ0) described above and the following (i):
(i) having a sliding-down angle (θs) of less than 30° as measured by a method described in Evaluation of Water Sliding Properties in Examples described later

The sliding-down angle (θs) of the tangible object is preferably 20° or less, more preferably 15° or less or less than 15°, still more preferably 12° or less, and particularly preferably 10° or less.

In the known measurement of the sliding-down angle, the influence of the wetting and spreading of the liquid droplet due to the hydrophilicity of the surface of the measurement base material is not taken into consideration. Therefore, in the case of a hydrophilic tangible object, the water sliding properties are not necessarily good even if the sliding-down angle as measured by the known measurement method is good. That is, in the known method, an inclination angle of the tangible object when the tangible object on which a water droplet is placed is inclined and the water droplet moves a certain distance in the sliding-down direction is defined as the sliding-down angle, but when the water droplet is placed on the hydrophilized tangible object, the wetting and spreading motion of the water droplet is observed. When the sliding-down angle is measured in this state, both sliding-down and wetting motions are observed at the same time, and the water sliding properties cannot be accurately evaluated in some cases. It is also conceivable to measure the sliding-down angle after the wetting and spreading motion reaches an equilibrium point, but this is not preferable because the moisture of the liquid droplet may evaporate before reaching the equilibrium point. Therefore, in order to determine that a tangible object having hydrophilic properties has good water sliding properties, it is required that the sliding-down angle is small in a measurement system in which the influence of the wetting and spreading of water droplets is taken into consideration.

On the other hand, in the evaluation of the water sliding properties of the present invention, as described later, an evaluation method is adopted, which is intended to exclude the influence of an end point movement due to the wetting and spreading from an end point movement of the water droplet in the sliding-down direction, and to extract an end point movement due to sliding-down. In this evaluation method, the tangible object of the present invention capable of having a reduced sliding-down angle can be said to have good water sliding properties while being hydrophilic.

In the present invention, the incorporation of the polymer particles in the tangible object can impart not only good hydrophilicity, but also a hydrophilicity sustaining effect and/or water sliding properties to the tangible object. That is, in the present invention, the incorporation of the polymer particles in the tangible object can apply sustained hydrophilization and/or water sliding to the tangible object. The shape of the tangible object may not be the above-described coating film shape, and is not particularly limited, but examples thereof include a planar shape (a film shape, a sheet shape, or a plate shape), a granular shape, a powder shape, a massive shape, a particle aggregate shape, a spherical shape, an ellipsoidal shape, a lens shape, a columnar shape, a rod shape, a cone shape, a cylindrical shape, a needle shape, a fibrous shape, a fiber aggregate shape (for example, a woven fabric or a nonwoven fabric), a hollow fiber shape, and a porous shape. The tangible object of the present invention is preferably a coating film.

For example, when the tangible object has a planar shape (preferably, a coating film formed from the composition (particularly, the resin composition)), its film thickness is not particularly limited, and is, for example, from 0.1 to 80 µm, preferably from 0.1 to 50 µm, more preferably from 0.1 to 10 µm, and still more preferably from 0.3 to 5 µm.

The method for producing the tangible object is not particularly limited, and a typically known method may be appropriately adopted. For example, the composition (preferably the resin composition) is molded or formed, and thus a tangible object can be obtained. In addition, in the case of the resin composition, the resin contained in the resin composition is not limited to the above-described hydrophilic resin, and various resins selected from thermoplastic resins and thermosetting resins can be used.

According to the present invention, a tangible object containing the polymer particles is allowed to exist on the surface of a tangible object not containing the polymer particles (hereinafter, referred to as base material), whereby the hydrophilicity sustaining effect and/or water sliding properties can be imparted to the surface of the base material. That is, according to the present invention, sustained hydrophilization and/or water sliding can be applied to the surface of the base material by allowing a tangible object containing the polymer particles to exist on the surface of the base material. In both cases of molding a tangible object containing polymer particles and forming a tangible object containing polymer particles on the surface of a base material, the molding or forming method is not particularly limited, and may be appropriately selected depending on the type of the composition to be used and the shape of the target tangible object. Examples of the molding or forming method include a method of forming a film by coating a composition (preferably a resin composition) containing the polymer particles onto a base material by a method such as application, spraying, printing, or impregnation; a method of forming a molded article by injection molding, extrusion molding, vacuum molding, compression molding, blow molding, or the like of a composition (preferably a resin composition) containing the polymer particles; and a method of laminating a tangible object (such as a molded article) containing the polymer particles on the surface of a base material. Among these, it is preferable to form a coating film containing the polymer particles on the surface of a base material by coating a composition (preferably a resin composition) containing the polymer particles onto the base material.

Examples of the resin constituting the resin composition used in the molding or forming include, in addition to the hydrophilic resin described above, polyester, polyethylene, polypropylene, triacetyl cellulose, polystyrene, polycarbonate, polyethersulfone, cellophane, polyamide, polyvinyl alcohol, polyacetal, polyphenylene ether, polyphenylene sulfide, polyimide, polyamideimide, polyetherimide, polyether ether ketone, a fluororesin such as polytetrafluoroethylene, an ABS resin, a noryl resin, an acrylic resin, an epoxy resin, and cellophane. Examples of the material constituting the base material include, in addition to the resins described above, inorganic materials such as glass, slate, and mortar; and metals such as stainless steel plate, iron, copper, aluminum, magnesium, and zinc, and alloys thereof, but the present invention is not limited only to such examples. The base material may be composed of a single layer alone, or may have a laminated structure in which a plurality of layers are laminated. In particular, the base material is preferably a fin material of a heat exchanger, and the fin material is more preferably an aluminum fin material.

In the case where the composition (preferably a resin composition) is coated onto a base material by a method such as coating, spraying, printing, or impregnation to form a coating film (hereinafter, a hydrophilic coating film), and a crosslinking agent is applied to the hydrophilic coating film, the crosslinking agent may be mixed with the composition in advance or may be added after film formation. When the tangible object (preferably a coating film) of the present invention is applied to a fin material (particularly an aluminum fin material) of a heat exchanger, the tangible object may be directly formed on the surface of the fin material (particularly an aluminum plate constituting the aluminum fin material) (that is, the fin material (particularly the aluminum plate constituting the aluminum fin material) and the tangible object may be directly laminated), or the tangible object may be formed via an undercoat layer such as a chemical conversion treatment layer and/or a resin coating layer provided on the surface of the fin material (particularly the aluminum plate constituting the aluminum fin material) for the purpose of preventing corrosion of the fin material (particularly aluminum constituting the aluminum fin material) (that is, the fin material (particularly the aluminum plate constituting the aluminum fin material) and the tangible object may be laminated via the undercoat layer).

As the chemical conversion treatment layer, a typically known layer can be used, and for example, a layer formed of an inorganic oxide or an inorganic-organic composite compound can be used. The inorganic material constituting the inorganic oxide or the inorganic-organic composite compound is preferably chromium, zirconium, or titanium as a main component. The layer formed of an inorganic oxide can be formed by, for example, subjecting a fin material (particularly, an aluminum plate constituting an aluminum fin material) to a chromate phosphate treatment, a zirconium phosphate treatment, a zirconium oxide treatment, a chromic acid chromate treatment, a zinc phosphate treatment, a titanic phosphate treatment, or the like. The layer formed of an inorganic-organic composite compound can be formed by, for example, subjecting a fin material (particularly, an aluminum plate constituting an aluminum fin material) to an application type chromate treatment, an application type zirconium treatment, or the like. Specific examples of such inorganic-organic composite compounds include acrylic-zirconium composites.

The resin coating layer can be formed by, for example, applying a resin coating material containing a resin to a fin material (particularly, on an aluminum plate constituting an aluminum fin material or a chemical conversion treatment layer) and solidifying the resin coating material by drying or the like. As the resin, typically known resins can be used, and examples thereof include various resins such as polyester-based, polyolefin-based, epoxy-based, urethane-based, and (meth)acrylic-based resins, and one type or a mixture of two or more types of these resins can be applied. Among these, a (meth)acrylic-based resin is preferable, and a polymer having a (meth)acrylic-based resin or the like as a main chain and containing an oxazoline group in a side chain may be used.

The resin coating layer may contain other optional components in addition to the above components as long as the effects of the present invention are not impaired. Examples of the optional component include various coating material additives for improving coatability, workability, physical properties of the coating film, and the like, and examples thereof include an aqueous solvent, a crosslinking agent, a surfactant, a film-forming aid, a surface adjusting agent, a wetting and dispersing agent, an anti-settling agent, an antioxidant, a defoaming agent, a rust inhibitor, an antibacterial agent, and an antifungal agent. One or more types of these coating material additives may be used.

The method for producing the hydrophilic coating film is not particularly limited, and may include a drying step and a curing step after the film forming step such as coating, spraying, printing, or impregnation.

The present application claims the benefit of priority based on Japanese Patent Application No. 2023-094540 filed on June 8, 2023, and Japanese Patent Application No. 2023-162888 filed on September 26, 2023. The entire disclosure of Japanese Patent Application No. 2023-094540 filed on June 8, 2023 and the entire disclosure of Japanese Patent Application No. 2023-162888 filed on September 26, 2023 are incorporated herein by reference.

### Examples

Hereinafter, the present invention will be described more specifically by way of Examples, but the present invention is not limited by the following Examples as a matter of course, and can be implemented with appropriate modifications within a range that can be adapted to the gist described above and below, and all of them are included in the technical scope of the present invention. Note that, hereinafter, "parts" represents "parts by mass" and "%" represents "mass%" unless otherwise specified.

### [Experimental Example 1]

### Measurement of Volume Average Particle Size

An aqueous polymer particle dispersion was diluted with ion-exchanged water so that the concentration of polymer particles was from 0.01 to 0.05 mass%, and the diluted dispersion was measured using a light scattering particle size distribution analyzer ("Zetasizer Ultra" available from Spectris Co., Ltd.) to determine a volume average particle size (nm) of the polymer particles by a dynamic light scattering method.

### Evaluation of Initial Hydrophilicity

A liquid droplet of 2 µL of pure water was prepared under the condition of 25°C using an automatic contact angle meter ("CA-X" available from Kyowa Interface Science Co., Ltd.), and the liquid droplet was landed on the surface of the tangible object (the surface of the coating film of the film-formed sample) prepared in each of the Examples, Comparative Examples, and Reference Examples, and the contact angle was calculated by a θ/2 method. The contact angle value 30 seconds after liquid landing was taken as measured value, and the measurement was performed five times, and an average value of three points excluding two points, the maximum value and the minimum value, was taken as initial contact angle of the tangible object (coating film). The initial hydrophilicity of the tangible object (coating film) was quantitatively evaluated according to the following criteria.
⊚: Initial contact angle is less than 15°
○: Initial contact angle is 15° or more and less than 40°
×: Initial contact angle of 40° or more

### Evaluation 1 of Hydrophilicity Sustaining Effect after Wet/Dry Cycle

The tangible object (specifically, the film-formed sample) produced in each of Examples 1-1 to 1-5, Example 1-8, Comparative Examples 1-1 and 1-2, and Reference Example 1-1 was immersed in pure water for 6 hours, and then the tangible object (film-formed sample) taken out was placed on a Kimwipes paper with the surface to be measured for contact angle (the coated surface of the sample in the case of the film-formed sample) facing upward, covered with another Kimwipes paper from above, and kept in this state for 5 seconds in an environment at 25°C and a humidity of 50%. Thereafter, the tangible object was taken out, and excess moisture was removed by blowing, with air, the surface to be measured for contact angle until no water droplets were visually observed thereon. The tangible object was dried at 80°C for 12 hours in an air atmosphere using an air blowing constant temperature incubator ("DNF400" available from Yamato Scientific Co., Ltd.). These operations were repeated five times to obtain a tangible object (film-formed sample) after the wet/dry cycle.

A liquid droplet of 2 µL of pure water was prepared under the condition of 25°C using an automatic contact angle meter ("CA-X" available from Kyowa Interface Science Co., Ltd.), and the liquid droplet was landed on the surface of the tangible object (the surface of the coating film of the film-formed sample) after the wet/dry cycle, and the contact angle was calculated by the θ/2 method. The contact angle value 30 seconds after liquid landing was taken as measured value, and the measurement was performed five times, and an average value of three points excluding two points, the maximum value and the minimum value, was taken as contact angle after the wet/dry cycle. The hydrophilicity sustaining effect after the wet/dry cycle of the tangible object (coating film) was quantitatively evaluated according to the following criteria.
⊚: Contact angle after wet/dry cycle is less than 15°
○: Contact angle after wet/dry cycle is 15° or more and less than 40°
×: Contact angle after wet/dry cycle is 40° or more

### Evaluation 2 of Hydrophilicity Sustaining Effect after Wet/Dry Cycle

The tangible object (film-formed sample) produced in each of Examples 1-6 and 1-7 and Reference Example 1-2 was immersed in pure water for 12 hours, then excess moisture of the tangible object (film-formed sample) taken out was wiped off, and the tangible object was air-dried. These operations were repeated five times to obtain a tangible object (film-formed sample) after the wet/dry cycle. In the preparation of the tangible object after the wet/dry cycle, it is recommended that the impregnated tangible object be placed on a Kimwipes paper with the surface to be measured for contact angle (the coated surface of the sample in the case of the film-formed sample) facing upward, covered with another Kimwipes paper from above, and kept in this state for 5 seconds to wipe off excess moisture in an environment at 25°C and a humidity of 50%. In the air drying, it is recommended that the surface to be measured for contact angle (the coated surface of the sample in the case of the film-formed sample) be blown with air until no water droplets were visually observed thereon, and then air dried (allowed to stand) for 12 hours in an environment at 25°C and a humidity of 50%.

A liquid droplet of 2 µL of pure water was prepared under the condition of 25°C using an automatic contact angle meter ("CA-X" available from Kyowa Interface Science Co., Ltd.), and the liquid droplet was landed on the surface of the tangible object (the surface of the coating film of the film-formed sample) after the wet/dry cycle, and the contact angle was calculated by the θ/2 method. The contact angle value 30 seconds after liquid landing was taken as measured value, and the measurement was performed five times, and an average value of three points excluding two points, the maximum value and the minimum value, was taken as contact angle after a water immersion treatment. The hydrophilicity sustaining effect after the wet/dry cycle of the tangible object (coating film) was quantitatively evaluated according to the following criteria.
⊚: Contact angle after wet/dry cycle is less than 15°
○: Contact angle after wet/dry cycle is 15° or more and less than 40°
×: Contact angle after wet/dry cycle is 40° or more

### Evaluation of Hydrophilicity after Oil Stain Adhesion

The tangible object (specifically, the film-formed sample) produced in each of Examples 1-1 to 1-5 and 1-8 or Reference Example 1-1 was immersed in pure water for 6 hours, and then the tangible object (film-formed sample) taken out was placed on a Kimwipes paper with the surface to be measured for contact angle (the coated surface of the sample in the case of the film-formed sample) facing upward, covered with another Kimwipes paper from above, and kept in this state for 5 seconds in an environment at 25°C and a humidity of 50%. Thereafter, the tangible object was taken out, and excess moisture was removed by air blowing until no water droplets were visually observed on the surface to be measured for contact angle. The tangible object was dried at 80°C for 12 hours in an air atmosphere using an air blowing constant temperature incubator ("DNF400" available from Yamato Scientific Co., Ltd.) to obtain a tangible object (film-formed sample) after the water immersion treatment. The tangible object (film-formed sample) after the water immersion treatment and 10 g of stearic acid as a simulated contaminant (oil stain) were placed in a stainless steel square container (Lock Type, 3400 mL, available from AS ONE Corporation) so as not to be in direct contact with each other, the container was sealed, and heated at 100°C for 24 hours using an air blowing constant temperature incubator ("DNF400" available from Yamato Scientific Co., Ltd.) to obtain a tangible object (film-formed sample) after the oil stain adhesion. A liquid droplet of 2 µL of pure water was prepared under the condition of 25°C using an automatic contact angle meter ("CA-X" available from Kyowa Interface Science Co., Ltd.), and the liquid droplet was landed on the surface of the tangible object (the surface of the coating film of the film-formed sample) after oil stain adhesion, and the contact angle was calculated by the θ/2 method. The contact angle value 30 seconds after liquid landing was taken as measured value, and the measurement was performed five times, and an average value of three points excluding two points, the maximum value and the minimum value, was taken as contact angle after oil stain adhesion. The hydrophilicity after oil stain adhesion of the tangible object (coating film) was quantitatively evaluated according to the following criteria.
⊚: Contact angle after oil stain adhesion is less than 15°
○: Contact angle after oil stain adhesion is 15° or more and less than 35°
×: Contact angle after oil stain adhesion is 35° or more

### [Synthesis of Polymer]

### Production Example 1-1

To a stainless steel-made reaction vessel equipped with a stirrer, a thermometer and a cooler, 1101 parts by mass of deionized water and 1.92 parts by mass of a solution obtained by diluting an anionic reactive emulsifier ADEKA REASOAP SR-20 (active ingredient: 100 mass%, available from ADEKA Corporation) containing an ether sulfate-type ammonium salt as a main component with ion-exchanged water to attain 25 mass% of an active ingredient (hereinafter referred to as "SR-20 (active ingredient: 25 mass%)") were added, and the internal temperature was raised to 75°C and kept at the same temperature. On the other hand, in a container different from the reaction vessel, 180.0 parts by mass of methyl 2-hydroxymethyl methacrylate (hereinafter referred to as "RHMA") and 20.0 parts by mass of divinylbenzene (hereinafter referred to as "DVB810", available from Nippon Steel & Sumikin Chemical Co., Ltd.) were mixed to prepare 200.0 parts by mass of a monomer composition. After the inside of the reaction vessel was purged with nitrogen gas, 40.0 parts by mass of the monomer composition, 21.0 parts by mass of hydrogen peroxide water (hydrogen peroxide concentration: 1.28 mass%), and 21.0 parts by mass of an aqueous L-ascorbic acid solution (L-ascorbic acid concentration: 1.90 mass%) were added to the reaction vessel, and an initial polymerization reaction was performed over 2 hours while the internal temperature was maintained at 75°C. Next, 160.0 parts by mass of the remainder of the monomer composition, 479.0 parts by mass of hydrogen peroxide water (hydrogen peroxide concentration: 0.22 mass%), and 486.04 parts by mass of a mixed composition of 479.0 parts by mass of an aqueous L-ascorbic acid solution (L-ascorbic acid concentration: 0.33 mass%) and 7.04 parts by mass of SR-20 (active ingredient: 25 mass%) were uniformly added dropwise to the reaction vessel from different inlets over 4 hours. After completion of the dropwise addition, the internal temperature was raised to 85°C, and the reaction solution was aged by being maintained at the same temperature for 2 hours, and then cooled to obtain an aqueous polymer dispersion 1-1 in which polymer particles were dispersed.

To a reaction vessel, 10 parts by mass of the aqueous polymer dispersion 1-1 obtained above and 1.1 parts by mass of an aqueous ammonia solution (concentration: 25.0 mass%) as a basic aqueous solution were added, and the mixture was stirred overnight at 25°C to obtain an aqueous polymer particle dispersion (a1-1) in which partially hydrolyzed polymer particles (1-1) were dispersed. The volume average particle size of the obtained polymer particles (1-1) was 393 nm.

### Production Example 1-2

An aqueous polymer particle dispersion (a1-2) in which hydrolyzed polymer particles (1-2) were dispersed was obtained in the same manner as in Production Example 1-1 except that the basic aqueous solution was changed to 1.4 parts by mass of an aqueous sodium hydroxide solution (concentration: 20.0%). The volume average particle size of the obtained polymer particles (1-2) was 399 nm.

### Production Example 1-3

To a stainless steel-made first reaction vessel equipped with a stirrer, a thermometer and a cooler, 1128 parts by mass of deionized water and 1.05 parts by mass of a solution obtained by diluting an anionic reactive emulsifier ADEKA REASOAP SR-20 (active ingredient: 100 mass%, available from ADEKA Corporation) containing an ether sulfate-type ammonium salt as a main component with ion-exchanged water to attain 10 mass% of an active ingredient (hereinafter referred to as "SR-20 (active ingredient: 10 mass%)") were added, and the internal temperature was raised to 75°C and kept at the same temperature. On the other hand, in a second reaction vessel different from the first reaction vessel, 70 parts by mass of methyl methacrylate (hereinafter referred to as "MMA") and 30 parts by mass of DVB810 were mixed to prepare 100 parts by mass of a monomer composition A. Further, in a third reaction vessel different from the first reaction vessel and the second reaction vessel, 90 parts by mass of RHMA and 10 parts by mass of DVB810 were mixed to prepare 100 parts by mass of a monomer composition B. Next, after the inside of the first reaction vessel was purged with nitrogen gas, 100 parts by mass of the monomer composition A, 20 parts by mass of hydrogen peroxide water (concentration: 3.35 mass%), and 20 parts by mass of an aqueous L-ascorbic acid solution (concentration: 5.0 mass%) were added to the first reaction vessel, and an initial polymerization reaction was performed over 2 hours while the internal temperature was maintained at 75°C. Subsequently, 100 parts by mass of the monomer composition B, 100 parts by mass of hydrogen peroxide water (concentration: 0.83 mass%), 100 parts by mass of an aqueous L-ascorbic acid solution (concentration: 1.25 mass%), and 100 parts by mass of a mixed composition of 7.04 parts by mass of SR-20 (active ingredient: 10 mass%), 0.36 parts by mass of an aqueous ammonia solution (concentration: 28 mass%), and 92.6 mass% of ion-exchanged water were uniformly added dropwise to the first reaction vessel from different inlets over 3 hours. After completion of the dropwise addition, the internal temperature of the first reaction vessel was maintained at 75°C, and the reaction solution was aged by being maintained at the same temperature for 2 hours, and then cooled to obtain an aqueous polymer dispersion 1-3 in which polymer particles were dispersed.

To the first reaction vessel, 10 parts by mass of the aqueous polymer dispersion 1-3 obtained above and 1.1 parts by mass of an aqueous ammonia solution (concentration: 25.0 mass%) as a basic aqueous solution were added, and the mixture was stirred overnight at 25°C to obtain an aqueous polymer particle dispersion (a1-3) in which partially hydrolyzed polymer particles (1-3) were dispersed. The volume average particle size of the obtained polymer particles (1-3) was 331 nm.

### Production Example 1-4

An aqueous polymer particle dispersion (a1-4) in which hydrolyzed polymer particles (1-4) were dispersed was obtained in the same manner as in Production Example 1-3 except that the basic aqueous solution was changed to 1.4 parts by mass of an aqueous sodium hydroxide solution (concentration: 20%) and that the amount of the reactive emulsifier was appropriately adjusted so as to reach the target particle size. The volume average particle size of the obtained polymer particles (1-4) was 58.4 nm.

### Production Example 1-5

An aqueous polymer particle dispersion (a1-5) in which hydrolyzed polymer particles (1-5) were dispersed was obtained in the same manner as in Production Example 1-3 except that the monomer composition B was changed to 80 parts by mass of RHMA, 10 parts by mass of DVB810, and 10 parts by mass of BLEMMER PME400 (hereinafter PME400) available from NOF CORPORATION, that the basic aqueous solution was changed to 1.2 parts by mass of an aqueous sodium hydroxide solution (concentration: 20%), and that the amount of the reactive emulsifier was appropriately adjusted so as to reach the target particle size. The volume average particle size of the obtained polymer particles (1-5) was 64.6 nm.

### Production Example 1-6

To a stainless steel-made reaction vessel equipped with a stirrer, a thermometer and a cooler, 832.0 parts by mass of deionized water and 0.96 parts by mass of SR-20 (active ingredient: 25.0 mass%) were added, and the internal temperature was raised to 75°C and kept at the same temperature. On the other hand, 180.0 parts by mass of RHMA and 20.0 parts by mass of DVB810 were mixed in a vessel different from the reaction vessel to prepare 200.0 parts by mass of a monomer composition.

After the inside of the reaction vessel was purged with nitrogen gas, 40.0 parts by mass of the monomer composition, 21.0 parts by mass of hydrogen peroxide water (hydrogen peroxide concentration: 1.28 mass%), and 21.0 parts by mass of an aqueous L-ascorbic acid solution (L-ascorbic acid concentration: 1.90 mass%) were added to the reaction vessel, and an initial polymerization reaction was performed. Next, 160.0 parts by mass of the remainder of the monomer composition, 479.0 parts by mass of hydrogen peroxide water (hydrogen peroxide concentration: 0.22 mass%), and 486.04 parts by mass of a mixed composition of 479.0 parts by mass of an aqueous L-ascorbic acid solution (L-ascorbic acid concentration: 0.33 mass%) and 7.04 parts by mass of SR-20 (active ingredient: 25.0 mass%) were uniformly added dropwise to the reaction vessel from different inlets over 4 hours. After completion of the dropwise addition, the internal temperature was maintained at 75°C, and the reaction solution was aged by being maintained at the same temperature for 2 hours, and then cooled to obtain an aqueous polymer dispersion 1-6 in which polymer particles were dispersed. The volume average particle size of the polymer particles was 221 nm.

The aqueous polymer particle dispersion 1-6 (100 parts by mass) and 15 parts by mass of an aqueous sodium hydroxide solution (concentration: 20.0 mass%) as a basic aqueous solution were mixed and stirred overnight at 25°C to obtain an aqueous polymer particle dispersion (a1-6) in which partially hydrolyzed polymer particles (1-6) were dispersed. The volume average particle size of the polymer particles (1-6) obtained at this time was 389 nm.

### Production Example 1-7

An aqueous polymer particle dispersion (a1-7) in which partially hydrolyzed polymer particles (1-7) were dispersed was obtained in the same manner as in Production Example 1-6 except that the aqueous sodium hydroxide solution was changed to 5 parts by mass of an aqueous ammonia solution (concentration: 25.0%). The volume average particle size of the polymer particles (1-7) obtained at this time was 379 nm.

**[Table 1]**

| Production Examples | Particle composition | Basic aqueous solution | |
|---|---|---|---|
| | | Type | Added amount (mol%) |
| 1-1 | RHMA/DVB810 = 90/10 | NH₃ | 50 |
| 1-2 | RHMA/DVB810 = 90/10 | NaOH | 50 |
| 1-3 | Core: MMA/DVB810 = 70/30 | NH₃ | 100 |
| | Shell: RHMA/DVB810 = 90/10 (core/shell ratio = 50/50) | | |
| 1-4 | Core: MMA/DVB810 = 70/30 | NaOH | 100 |
| | Shell: RHMA/DVB810 = 90/10 (core/shell ratio = 50/50) | | |
| 1-5 | Core: MMA/DVB810 = 70/30 | NaOH | 100 |
| | Shell: RHMA/DVB810/PME400 = 80/10/10 (core/shell ratio = 50/50) | | |
| 1-6 | RHMA/DVB810 = 90/10 | NaOH | 50 |
| 1-7 | RHMA/DVB810 = 90/10 | NH₃ | 50 |

In Table 1, the amount of the basic aqueous solution added represents the number of moles of the added base when the number of moles of RHMA in the polymer particles is 100 mol%, that is, it corresponds to the percentage of ionization and the percentage of hydrolysis.

### [Example 1-1]

### Preparation of Film-Formed Sample A1-1

EPOCROS K-2035E (available from Nippon Shokubai Co., Ltd.; content of solids: 40 mass%) as an aqueous resin and CS-12 (available from JNC Corporation; active ingredient: 100 mass%) as a film-forming aid were blended at an active ingredient ratio (mass basis) of 100:25, and diluted with pure water to a final content of solids of 10 mass% to obtain an undercoat film composition.

Next, the undercoat film composition was applied to an aluminum plate (length: 150 mm, width: 60 mm, thickness: 0.100 mm) with a bar coater so that the thickness of the film after coating was 1.1 µm, and dried at 160°C for 11 seconds with an automatic discharge dryer ("AT-101 (standard type)" available from Tojyo Netsugaku Co., Ltd.) to obtain an undercoat layer-coated aluminum plate.

An aqueous polyacrylic acid resin (weight average molecular weight: about 5000) as a hydrophilic resin, the aqueous polymer particle dispersion (a1 - 1), and an aqueous crosslinking agent ("EPOCROS WS-700" available from Nippon Shokubai Co., Ltd.; content of solids: 25 mass%) were blended at a ratio (mass basis) of 100:25:18 in terms of solids, and diluted with pure water so that the final content of solids was 5 mass%, thereby obtaining a coating film composition A1-1.

Next, the coating film composition A1-1 was applied to the undercoat layer-coated surface of the undercoat layer-coated aluminum plate prepared above with a bar coater so that the thickness of the film after coating was 0.70 µm, and dried at 200°C for 11 seconds with an automatic discharge dryer ("AT-101 (standard type)" available from Tojyo Netsugaku Co., Ltd.) to obtain a film-formed sample A1-1 on which a coating film was laminated. The evaluation results of the obtained film-formed sample are shown in Table 2.

### [Examples 1-2 to 1-5]

### Preparation of Film-Formed Samples A1-2 to A1-5

Film-formed samples A1-2 to A1-5 were prepared in the same manner as in Example 1-1 except that the aqueous polymer particle dispersion to be blended was changed to those described below and that the amount of each of the polymer particles added per 100 parts of the solids of the aqueous polyacrylic acid resin was changed to those shown in Table 2. The evaluation results of the obtained film-formed samples are shown in Table 2.
Example 1-2: aqueous polymer particle dispersion (a1-2)
Example 1-3: aqueous polymer particle dispersion (a1-3)
Example 1-4: aqueous polymer particle dispersion (a1-4)
Example 1-5: aqueous polymer particle dispersion (a1-5)

### [Comparative Examples 1-1 and 1-2]

Film-formed samples B1-1 and B1-2 were prepared in the same manner as in Example 1-1 except that the aqueous polymer particle dispersion to be blended was changed to those described below. The evaluation results of the obtained film-formed samples are shown in Table 2.
Comparative Example 1-1: silica particles ("SNOWTEX N" available from Nissan Chemical Corporation, average particle size: 12 nm)
Comparative Example 1-2: acrylic particles ("EPOSTAR MX100W" available from Nippon Shokubai Co., Ltd., average particle size: 150 nm)

### [Reference Example 1-1]

A film-formed sample C1-1 was prepared in the same manner as in Example 1-1 except that no aqueous polymer particle dispersion was blended. The evaluation results of the obtained film-formed sample are shown in Table 2.

### [Example 1-6]

### (1) Preparation of Hydrophilic Resin

Monoethanolamine was charged into an aqueous polyacrylic acid solution having a weight average molecular weight of 4000, and the pH was adjusted to 7.0, followed by adjustment with pure water, to obtain an aqueous polycarboxylic acid-based resin solution (Z-1a) containing a polycarboxylic acid-based resin (Z-1) at a concentration of solids of 54%.

### (2) Preparation of Coating Composition

The aqueous polycarboxylic acid-based resin solution (Z-1a) and the aqueous polymer particle dispersion (a1-6) were blended so that the ratio of the resin (Z-1) to the polymer particles (1-6) was 100:10 in terms of solids, and the mixture was diluted with pure water so that the final content of solids was 5 mass%, followed by sufficient stirring with a stirrer chip, thereby obtaining a coating composition.

### (3) Preparation of Film-Formed Sample A1-6

The coated surface of an aluminum test panel (A1050P, available from Nippon Testpanel Co., Ltd., length: 150 mm, width: 70 mm, thickness: 0.800 mm) was wiped with a Kimwipes paper impregnated with acetone until the Kimwipes paper was not stained with black stain. Next, Ultrasealer III (available from Nippon Paint Co., Ltd.) was applied to an aluminum test panel washed with acetone with a bar coater so that the thickness of the film after coating was 11.5 µm, and dried at 100°C for 10 minutes using an air blowing constant temperature incubator ("DNF400" available from Yamato Scientific Co., Ltd.) to prepare a surface-modified aluminum test panel.

The coating composition was applied to the modified surface of the aluminum test panel prepared above with a bar coater so that the thickness of the film after coating was 45.8 µm, and dried at 200°C for 1 minute in an air blowing constant temperature incubator ("DNF400" available from Yamato Scientific Co., Ltd.) to obtain a film-formed sample A1-6 on which a coating film was laminated. The evaluation results of the obtained film-formed sample are shown in Table 2.

### [Example 1-7]

A film-formed sample A1-7 was obtained in the same manner as in Example 1-6 except that the aqueous polymer particle dispersion to be blended was changed to the aqueous polymer particle dispersion (a1-7), and that the aqueous polycarboxylic acid-based resin solution (Z-1a) and the aqueous polymer particle dispersion (a1-7) were blended so that the ratio of the resin (Z-1) to the polymer particles (1-7) was 100:20 in terms of solids. The evaluation results of the obtained film-formed sample are shown in Table 2.

### [Example 1-8]

A film-formed sample A1-8 was obtained in the same manner as in Example 1-1 except that a coating film composition A1-8 obtained by blending an aqueous polyacrylic acid resin (weight average molecular weight: about 5000) as a hydrophilic resin, an aqueous polymer particle dispersion (a1-5), an aqueous crosslinking agent ("EPOCROS WS-700" available from Nippon Shokubai Co., Ltd.; content of solids: 25 mass%), and L-ascorbic acid at a ratio (mass basis) of 100:100:18:20 in terms of solids and diluting the mixture with pure water so that the final content of solids was 5 mass% was used instead of the coating film composition A1-1. The evaluation results of the obtained film-formed sample are shown in Table 2.

### [Reference Example 1-2]

A film-formed sample C-2 was prepared in the same manner as in Example 1-6 except that no aqueous polymer particle dispersion was blended. The evaluation results of the obtained film-formed sample are shown in Table 2.

**[Table 2]**

| | Film-formed sample | Amount of particles added | Initial contact angle | Initial hydrophilicity | Contact angle after wet/dry cycle | Hydrophilicity sustaining properties after heat cycle | Contact angle after oil stain adhesion | Hydrophilicity after oil stain adhesion |
|---|---|---|---|---|---|---|---|---|
| Example 1-1 | A1-1 | 25 parts | 27.3° | ○ | 20.9° | ○ | 14° | ⊚ |
| Example 1-2 | A1-2 | 25 parts | 26.3° | ○ | 31.2° | ○ | 10.6° | ⊚ |
| Example 1-3 | A1-3 | 100 parts | 24° | ○ | 25.9° | ○ | 20.3° | ○ |
| Example 1-4 | A1-4 | 100 parts | 13.2° | ⊚ | 29.8° | ○ | 5° | ⊚ |
| Example 1-5 | A1-5 | 100 parts | 9.9° | ⊚ | 28.3° | ○ | 10° | ⊚ |
| Example 1-6 | A1-6 | 10 parts | 11° | ⊚ | 19° | ○ | - | - |
| Example 1-7 | A1-7 | 20 parts | 15° | ○ | 20° | ○ | - | - |
| Example 1-8 | A1-8 | 100 parts | 12.4° | ⊚ | 8.4° | ⊚ | 9.7 | ⊚ |
| Comparative Example 1-1 | B1-1 | 25 parts | 15° | ○ | 50.9° | × | - | - |
| Comparative Example 1-2 | B1-2 | 25 parts | 18.6° | ○ | 41° | × | - | - |
| Reference Example 1-1 | C1-1 | - | 16.5° | ○ | 40.5° | × | 52.8° | × |
| Reference Example 1-2 | C1-2 | - | 13° | ⊚ | 64° | × | - | - |

In Table 2, the "amount of particles added" refers to the amount of particles added (in terms of solids) when the content of solids of the hydrophilic resin is 100 parts.

From the results of Table 2, the agent for imparting a hydrophilicity sustaining effect and/or water sliding properties of the present invention containing specific particles as a constituent component can impart the hydrophilicity sustaining effect that hydrophilicity is sustained even after the wet/dry cycle, to a tangible object such as a coating film. In addition, even after oil stain adhesion, the effect of exhibiting good hydrophilicity can be imparted.

### Experimental Example 2

### Measurement of Volume Average Particle Size

The volume average particle size (nm) of the polymer particles was determined by the same method as in Measurement of Volume Average Particle Size in Experimental Example 1.

### Evaluation of Hydrophilicity

The initial contact angle of the tangible object (coating film) was determined by the same method as in Evaluation of Initial Hydrophilicity in Experimental Example 1, and the hydrophilicity of the tangible object (coating film) was quantitatively evaluated according to the following criteria.
⊚: Initial contact angle is less than 15°
○: Initial contact angle is 15° or more and less than 40°
×: Initial contact angle of 40° or more

### Evaluation of Water Sliding Properties

As the evaluation of sliding-down properties, the sliding-down angle of a water droplet with respect to the surface of the tangible object (the surface of the coating film of the film-formed sample) was measured.

Specifically, he tangible object (film-formed sample) was immersed in a pure water flow under the condition of 25°C for 1 hour, and then the tangible object (film-formed sample) taken out was placed on a Kimwipes paper with the surface to be measured for sliding-down angle (the coated surface of the sample in the case of the film-formed sample) facing upward, covered with another Kimwipes paper from above, and kept in this state for 5 seconds in an environment at 25°C and a humidity of 50%. Thereafter, the tangible object was taken out, and excess moisture was removed by air blowing until no water droplets were visually observed on the surface to be measured for sliding-down angle. The tangible object was dried at 80°C for 2 hours using an air blowing constant temperature incubator ("DNF400" available from Yamato Scientific Co., Ltd.) to obtain a tangible object (film-formed sample) reproducing a fin material (fin material after adhesion of condensed water and heat drying) when a heat exchanger was used. Hereinafter, the tangible object subjected to the above treatment is referred to as a "tangible object after heat cycle" (specifically, a film-formed sample after heat cycle).

Using an automatic contact angle meter ("CA-X" available from Kyowa Interface Science Co., Ltd.), a water droplet of 10 µL of pure water was prepared under the condition of 25°C, the water droplet was landed on the surface of a horizontally disposed tangible object after the heat cycle (the surface of the coating film of the film-formed sample after the heat cycle), the tangible object was gradually inclined at a rate of 2°/sec by 0.5° from 0.1 seconds after the droplet landing, the angle at which the water droplet started to move was taken as a measured value, the measurement was performed five times, and an average value of three points excluding two points, the maximum value and the minimum value, was taken as sliding-down angle θs. The water sliding properties of the tangible object (coating film) were quantitatively evaluated according to the following criteria.
⊚: Sliding-down angle θs is less than 15°
○: Sliding-down angle θs is 15° or more and less than 30°
×: Sliding-down angle θs is 30° or more

In addition, as illustrated in FIG. 1, the movement of the water droplet was determined when an end point on an side opposite to the sliding-down direction of a water droplet (2a) after 0.1 seconds from the droplet landing on the surface of a tangible object 1 is R0, an end point on the sliding-down direction side is L0, an end point on an side opposite to the sliding-down direction of a water droplet (2b) at an inclination angle θ is Rθ, an end point on the sliding-down direction side is Lθ, an end point moving distance on an side opposite to the sliding-down direction of the water droplet is dR = -|Rθ - R0|, and an end point moving distance dL on the sliding-down direction side of the water droplet is dL = |Lθ - L0|. It was determined that the water droplet had moved when dR + dL > 1.00 mm is satisfied for the first time, and the inclination angle θ at that time was defined as sliding-down angle θs. This definition is an evaluation method which is intended to exclude the influence of an end point movement due to the wetting and spreading from an end point movement of the water droplet in the sliding-down direction, and to extract an end point movement due to sliding-down.

### [Synthesis of Polymer]

### Production Example 2-1

To a stainless steel-made first reaction vessel equipped with a stirrer, a thermometer and a cooler, 1128 parts by mass of deionized water and 1.05 parts by mass of SR-20 (active ingredient: 10 mass%) were added, and the internal temperature was raised to 75°C and kept at the same temperature. On the other hand, in a second reaction vessel different from the first reaction vessel, 70 parts by mass of MMA and 30 parts by mass of DVB810 were mixed to prepare 100 parts by mass of a monomer composition A. Further, in a third reaction vessel different from the first reaction vessel and the second reaction vessel, 90 parts by mass of RHMA and 10 parts by mass of DVB810 were mixed to prepare 100 parts by mass of a monomer composition B. Next, after the inside of the first reaction vessel was purged with nitrogen gas, 100 parts by mass of the monomer composition A, 20 parts by mass of hydrogen peroxide water (concentration: 3.35 mass%), and 20 parts by mass of an aqueous L-ascorbic acid solution (concentration: 5.0 mass%) were added to the first reaction vessel, and an initial polymerization reaction was performed over 2 hours while the internal temperature was maintained at 75°C. Subsequently, 100 parts by mass of the monomer composition B, 100 parts by mass of hydrogen peroxide water (concentration: 0.83 mass%), 100 parts by mass of an aqueous L-ascorbic acid solution (concentration: 1.25 mass%), and 100 parts by mass of a mixed composition of 7.04 parts by mass of SR-20 (active ingredient: 10 mass%), 0.36 parts by mass of an aqueous ammonia solution (concentration: 28 mass%), and 92.6 parts by mass of ion-exchanged water were uniformly added dropwise to the first reaction vessel from different inlets over 3 hours. After completion of the dropwise addition, the internal temperature of the first reaction vessel was maintained at 75°C, and the reaction solution was aged by being maintained at the same temperature for 2 hours, and then cooled to obtain an aqueous polymer dispersion 2-1 in which polymer particles were dispersed.

To the first reaction vessel, 10 parts by mass of the aqueous polymer dispersion 2-1 obtained above and 1.4 parts by mass of an aqueous sodium hydroxide solution (concentration: 20%) as a basic aqueous solution were added, and the mixture was stirred overnight at 25°C to obtain an aqueous polymer particle dispersion (a2-1) in which hydrolyzed polymer particles (2-1) were dispersed. The volume average particle size of the obtained polymer particles (2-1) was 330 nm.

### Production Example 2-2

An aqueous polymer particle dispersion (a2-2) in which hydrolyzed polymer particles (2-2) were dispersed was obtained in the same manner as in Production Example 2-1 except that the monomer composition B was changed to 80 parts by mass of RHMA, 10 parts by mass of DVB810, and 10 parts by mass of PME400, and that the basic aqueous solution was changed to 1.2 parts by mass of an aqueous sodium hydroxide solution (concentration: 20%). The volume average particle size of the obtained polymer particles (2-2) was 302 nm.

**[Table 3]**

| Production Examples | Particle composition | Basic aqueous solution | |
|---|---|---|---|
| | | Type | Added amount (mol%) |
| 2-1 | Core: MMA/DVB810 = 70/30 | NaOH | 100 |
| | Shell: RHMA/DVB810 = 90/10 (core/shell ratio = 50/50) | | |
| 2-2 | Core: MMA/DVB810 = 70/30 | NaOH | 100 |
| | Shell: RHMA/DVB810/PME400 = 80/10/10 (core/shell ratio = 50/50) | | |

In Table 3, the amount of the basic aqueous solution added represents the number of moles of the added base when the number of moles of RHMA in the polymer particles is 100 mol%, that is, it corresponds to the percentage of ionization and the percentage of hydrolysis.

### [Example 2-1]

### Preparation of Film-Formed Sample A2-1

An aqueous polyacrylic acid resin (weight average molecular weight: about 5000) as a hydrophilic resin, the aqueous polymer particle dispersion (a2-1), and an aqueous crosslinking agent ("EPOCROS WS-700" available from Nippon Shokubai Co., Ltd.; content of solids: 25 mass%) were blended at a ratio (mass basis) of 100:100:18 in terms of solids, and diluted with pure water so that the final content of solids was 5.45 mass%, thereby obtaining a coating film composition A2-1.

Next, the coating film composition A2-1 was applied to the surface of an aluminum plate (length: 150 mm, width: 60 mm, thickness: 0.100 mm) with a bar coater so that the thickness of the film after coating would be 1.00 µm, and dried at 200°C for 1 minute with an automatic discharge dryer ("AT-101 (standard type)" available from Tojyo Netsugaku Co., Ltd.), thereby obtaining a film-formed sample A2-1 on which a coating film was laminated. The evaluation results of the obtained film-formed samples are shown in Table 4.

### [Example 2-2]

### Film-Formed Sample A2-2

A film-formed sample A2-2 was prepared in the same manner as in Example 2-1 except that the aqueous polymer particle dispersion to be blended was changed to the aqueous polymer particle dispersion (a2-2). The evaluation results of the obtained film-formed samples are shown in Table 4.

### [Reference Example 2-1]

A film-formed sample C2-1 was prepared in the same manner as in Example 2-1 except that no aqueous polymer particle dispersion was blended. The evaluation results of the obtained film-formed samples are shown in Table 4.

**[Table 4]**

| | Film-formed sample | Amount of particles added | Initial contact angle | Initial hydrophilicity | Sliding-down angle | Water sliding properties |
|---|---|---|---|---|---|---|
| Example 2-1 | A2-1 | 100 parts | 12° | ⊚ | 11° | ⊚ |
| Example 2-2 | A2-2 | 100 parts | 12° | ⊚ | 8° | ⊚ |
| Reference Example 2-1 | C2-1 | - | 54° | × | > 60° | × |

In Table 4, the "amount of particles added" refers to the amount of particles added (in terms of solids) when the content of solids of the hydrophilic resin is 100 parts.

From the results shown in Table 4, the agent for imparting a hydrophilicity sustaining effect and/or water sliding properties of the present invention containing specific particles as a constituent component can impart good water sliding properties to a tangible object such as a coating film while imparting good hydrophilicity thereto.

### Reference Signs List

1: Tangible object
2a: Water droplet 0.1 second after droplet landing
2b: Water droplet at inclination angle θ
R0: End point on side opposite to sliding-down direction of water droplet 0.1 seconds after droplet landing
L0: End point on sliding-down direction side of water droplet 0.1 seconds after droplet landing
Rθ: End point on side opposite to sliding-down direction of water droplet at inclination angle θ
Lθ: End point on sliding-down direction side of water droplet at inclination angle θ

## Claims

1. An agent for imparting a hydrophilicity sustaining effect and/or a water sliding property, the agent comprising, as a constituent component, particles including a crosslinked polymer having a -COOR group (where R represents a hydrocarbon group, a hydrogen atom, an alkali metal atom or ammonium) and a hydroxy group.

2. The agent for imparting a hydrophilicity sustaining effect and/or a water sliding property according to claim 1, wherein the crosslinked polymer includes a structural unit derived from a monomer (AB1) having, in one molecule, one or more -COOR groups, one or more hydroxy groups, and one polymerizable group, and a structural unit derived from a monomer (C) having, in one molecule, two or more polymerizable groups.

3. The agent for imparting a hydrophilicity sustaining effect and/or a water sliding property according to claim 2, wherein the structural unit derived from the monomer (AB1) is a structural unit represented by Formula (1) described below, and the structural unit derived from the monomer (C) is a structural unit derived from a polyfunctional ethylenically unsaturated monomer: 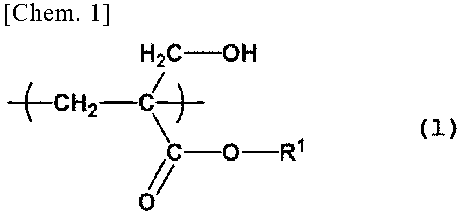 where R¹ represents an alkyl group having from 1 to 4 carbon atoms, a hydrogen atom, an alkali metal atom, or ammonium.

4. The agent for imparting a hydrophilicity sustaining effect and/or a water sliding property according to claim 3, wherein the crosslinked polymer includes the structural unit represented by Formula (1) described above, where R¹ is an alkali metal atom or ammonium.

5. The agent for imparting a hydrophilicity sustaining effect and/or a water sliding property according to claim 2, wherein a content of the structural unit derived from the monomer (AB1) is 5 mass% or more in the crosslinked polymer.

6. The agent for imparting a hydrophilicity sustaining effect and/or a water sliding property according to claim 2, wherein a content of the structural unit derived from the monomer (C) is from 0.01 to 70 mass% in the crosslinked polymer.

7. The agent for imparting a hydrophilicity sustaining effect and/or a water sliding property according to claim 2, wherein the crosslinked polymer further includes a structural unit derived from a polyoxyalkylene group-containing ethylenically unsaturated monomer.

8. The agent for imparting a hydrophilicity sustaining effect and/or a water sliding property according to claim 1, wherein the particles have a volume average particle size of from 10 nm to 10 µm.

9. The agent for imparting a hydrophilicity sustaining effect and/or a water sliding property according to claim 1, wherein the particles are single-layer particles including the crosslinked polymer, or core-shell structured particles including the crosslinked polymer in a shell layer.

10. The agent for imparting a hydrophilicity sustaining effect and/or a water sliding property according to claim 1, the agent being used for a fin material of a heat exchanger.

11. The agent for imparting a hydrophilicity sustaining effect and/or a water sliding property according to claim 10, wherein the fin material is used for an aluminum fin material.

12. A resin composition comprising a hydrophilic resin and the agent for imparting a hydrophilicity sustaining effect and/or a water sliding property described in any one of claims 1 to 11.

13. The resin composition according to claim 12, wherein the hydrophilic resin is a resin having at least one polar functional group selected from the group consisting of a carboxy group and a salt of a carboxy group in a side chain.

14. The resin composition according to claim 12, further comprising a crosslinking agent.

15. A method for applying sustained hydrophilization and/or water sliding to a tangible object, the method comprising incorporating, into the tangible object, particles including a crosslinked polymer having a -COOR group (where R represents a hydrocarbon group, a hydrogen atom, an alkali metal atom or ammonium) and a hydroxy group.

16. A method for applying sustained hydrophilization and/or water sliding to a surface of a base material, the method comprising coating the base material with a composition including particles including a crosslinked polymer having a -COOR group (where R represents a hydrocarbon group, a hydrogen atom, an alkali metal atom or ammonium) and a hydroxy group, to form a coating film including the particles on the surface of the base material.

17. The method according to claim 16, wherein the base material is a fin material of a heat exchanger.
